(19) **Europäisches Patentamt**
**European Patent Office**
**Office européen des brevets**

(11) **EP 2 993 809 B1**

(12) **EUROPEAN PATENT SPECIFICATION**

(45) Date of publication and mention
of the grant of the patent:
**22.05.2019 Bulletin 2019/21**

(51) Int Cl.:
***H04B 10/58*** (2013.01)     ***H04L 27/26*** (2006.01)

(21) Application number: **15182256.6**

(22) Date of filing: **25.08.2015**

(54) **OFDM SYSTEM AND CENTER FREQUENCY ADJUSTMENT METHOD THEREOF**

OPTISCHES FREQUENZMULTIPLEXSYSTEM UND VERFAHREN ZUR ZENTRALEN FREQUENZEINSTELLUNG

SYSTÈME DE MULTIPLEXAGE FRÉQUENTIEL OPTIQUE ET MÉTHODE D'AJUSTAGE DE LA FRÉQUENCE CENTRALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.08.2014 CN 201410428147**

(43) Date of publication of application:
**09.03.2016 Bulletin 2016/10**

(73) Proprietor: **Huawei Technologies Co., Ltd.**
**Longgang District**
**Shenzhen, Guangdong 518129 (CN)**

(72) Inventors:
• **SHUAI, Jialong**
**Shenzhen 518129 (CN)**
• **CHEN, Weijian**
**Shenzhen 518129 (CN)**
• **ZHANG, Qiang**
**Shenzhen 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**JP-A- H09 224 015     JP-A- H11 196 064**
**JP-A- 2009 164 887**

• **JUNGWON LEE ET AL: "SNR Analysis of OFDM Systems in the Presence of Carrier Frequency Offset for Fading Channels", IEEE TRANSACTIONS ON WIRELESS COMMUNICATIONS, IEEE SERVICE CENTER, PISCATAWAY, NJ, US, vol. 5, no. 12, 1 December 2006 (2006-12-01), pages 3360-3364, XP011151673, ISSN: 1536-1276, DOI: 10.1109/TWC.2006.256956**

**Description**

**TECHNICAL FIELD**

The present invention relates to the field of communications technologies, and in particular, to an OFDM system and a center frequency adjustment method thereof.

**BACKGROUND**

An OFDM (Orthogonal Frequency Division Multiplexing) technology is a multicarrier modulation technology, which is a high-speed transmission technology widely applied in communications standards such as IEEE 802.11G in wireless communications, and is a currently known modulation technology with the highest spectrum utilization. A basic principle of the OFDM technology is that, a high-speed serial data stream is divided into several parallel low-speed sub-data streams for simultaneous transmission. In a frequency domain, the basic principle may be described as follows: In a frequency domain, a given channel is divided into many orthogonal sub-channels that mutually overlap, one subcarrier is used on each sub-channel for modulation, and the subcarriers are mutually orthogonal to perform parallel transmission.

Currently, a high-speed optical transmission system based on OFDM mainly includes two implementation schemes: a coherent optical OFDM technology (CO-OFDM) and an incoherent optical OFDM technology (IO-OFDM). CO-OFDM refers to that coherent demodulation is used at a receive end of a high-speed optical transmission system, and IO-OFDM refers to that conventional direct detection is used at a receive end of a high-speed optical transmission system. The use of CO-OFDM and the use of IO-OFDM are similar in terms of a dispersion suppression effect. However, if IO-OFDM is used, while dispersion and polarization mode dispersion are effectively suppressed, a high-speed optical transmission system has a relatively high cost-performance ratio. Therefore, IO-OFDM is a main research hot spot currently.

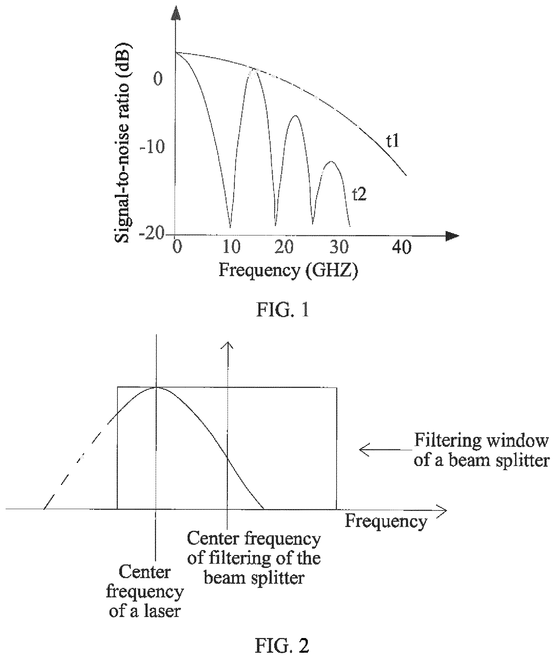

Due to features of high spectral efficiency and low costs of OFDM, OFDM is considered as one of short-distance metropolitan optical transmission solutions. In the low cost OFDM solution, a signal generated at a transmit end is a double sideband signal, and after the signal is transmitted through a link, a fading point occurs due to an effect of dispersion, which causes a bandwidth waste and deteriorates system performance. As shown in FIG. 1, a horizontal coordinate represents a working frequency of an OFDM system, and a vertical coordinate represents an SNR (signal-to-noise ratio) of the system. In a case in which other factors remain unchanged, a larger SNR leads to better system performance. A curve t2 shows an SNR curve after the double sideband signal passes through an optical fiber. As can be seen from the curve t2, after the double sideband signal passes through an optical fiber, fading points occur, and the SNR near each fading point sharply decreases, which affects the overall performance of the system.

When single sideband filtering is implemented with a filter, the fading points occurring after the OFDM signal passes through the optical fiber can be reduced. A curve t1 shows an SNR curve after a single sideband signal passes through an optical fiber. As can be seen from the curve t1, the SNR performance after the single sideband signal passes through the optical fiber is better than the SNR performance after the double sideband signal passes through the optical fiber, thereby better utilizing the bandwidth and improving the system performance.

A method for implementing single sideband filtering is shown in FIG. 2. A horizontal axis represents a frequency f, a rectangular box indicates a filtering window of a beam splitter or a beam combiner, and a curve indicates a frequency spectrum of an OFDM signal transmitted by a laser. Frequencies of the OFDM signal outside the filtering window are filtered out, and the filter filters out partial lower sideband frequency components of the OFDM signal, as shown by the dotted line in FIG. 2.

The OFDM system using single sideband filtering is called an OFDM single sideband system for short. In the OFDM single sideband system, data is generated at an OFDM transmit end, and is transmitted by a laser; after passing through a filter, the data enters a receiver at an OFDM receive end; and finally, a data processing unit at the receive end processes the data.

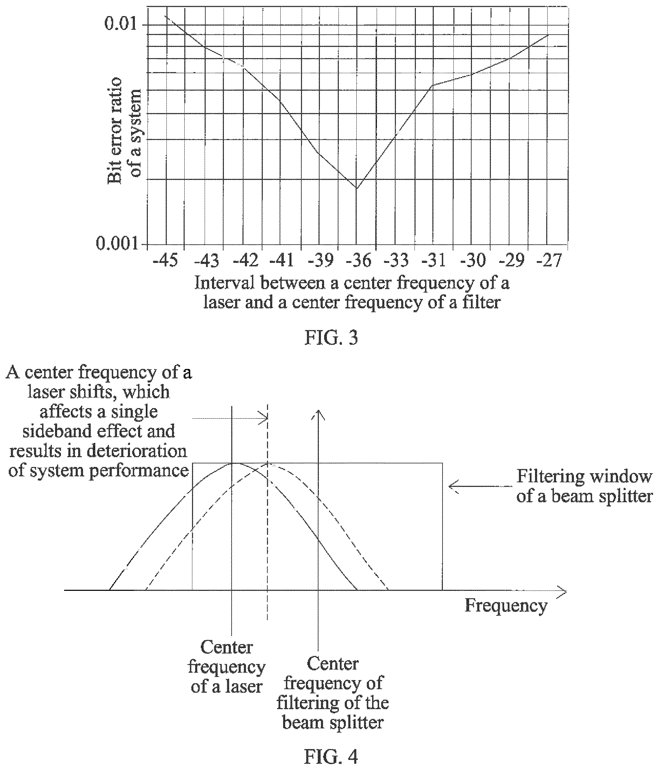

It is found by means of theoretical analysis and test that, when the OFDM single sideband system uses a filter to filter out partial frequency components of a sideband in an OFDM signal, the system performance can be significantly improved, where the beam combiner and the beam splitter in the system may be used as filters. As shown in FIG. 3, a horizontal coordinate represents an interval between a frequency of a laser and a center frequency of a filter, and a vertical coordinate represents a bit error rate of the system. A curve in FIG. 3 shows the bit error rate of the system, and a lower bit error rate leads to better system performance. When an interval is kept between the frequency of the laser and the center frequency of the filter in the OFDM single sideband system, the system performance is optimal. When a frequency shift occurs in the laser or the filter, an interval between frequencies of the laser and the filter changes, and the filtered frequency components, which are filtered out, of the OFDM signal also change, which affects a single sideband effect and further results in reduction of system performance.

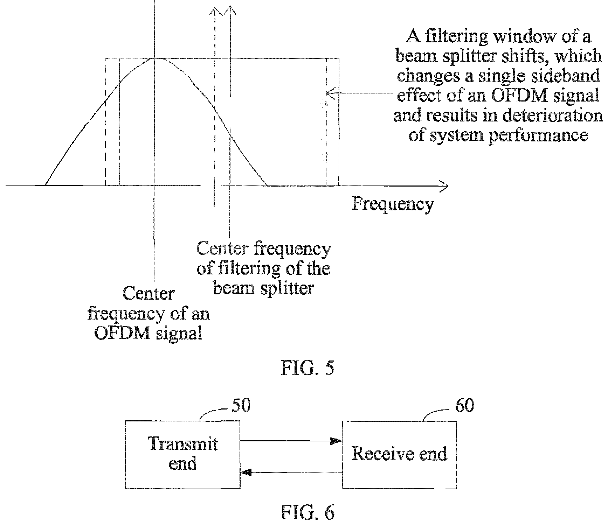

As shown in FIG. 4, a horizontal axis represents a frequency f, a solid-line rectangular box indicates a filtering window of a beam splitter or a beam combiner, and a solid curve shows a frequency spectrum of an OFDM signal transmitted by a laser. Frequencies of the OFDM signal outside the filtering window are filtered out. It is assumed that the performance of the OFDM single sideband system is optimal when an interval shown in FIG. 4 is kept between a center frequency of the filter and a center frequency of the laser. If the frequency of the laser shifts to the right, as shown by the dotted line in FIG. 4, the frequency components that are filtered out change, and the system performance deteriorates. As shown in FIG. 5, when the filtering window shifts to the left, the frequency components that are filtered out also change, which results in performance deterioration.

Because the center frequency of the laser in the OFDM single sideband system randomly drifts, the performance is severely affected, and the stability of the OFDM single sideband system is reduced.

JP H09 224015 A discloses that a carrier amplitudes of transmission channel lower end and upper end frequencies are detected by a carrier level detection judgement means from a demodulation data of an orthogonal frequency division multiplex demodulator. A system controller detects the center frequency deviation of an intermediate frequency filter by comparing the levels, adjusts the frequency of a local oscillator and an intermediate frequency oscillator corresponding to the deviation amount and controls the intermediate frequency so as to be almost matched with the center frequency of the filter.

Jungwon Lee et al.: "SNR Analysis of OFDM Systems in the Presence of Carrier Frequency Offset for Fading Channels", IEEE Transactions on Wireless Communications, IEEE Service Center, Piscataway, NJ, US vol. 5, no. 12, 1 December 2006, pp. 3360-3364 discloses an analysis of the effect of a carrier frequency offset in an OFDM system for multipath fading channels. The frequency offset attenuates the desired signal and causes inter-carrier interference, thus reducing the signal-to-noise ratio. The signal-to-noise ratio is used to determine the carrier frequency offset.

## SUMMARY

The present invention provides an OFDM system, a data processing method and a center frequency adjustment method thereof, and a related device. A technical problem to be solved by the present invention is that, a shift of a center frequency of an OFDM signal is identified, and the center frequency of the OFDM signal is adjusted, to fix the center frequency, thereby ensuring stability of the system performance.

A first aspect provides a center frequency adjustment method of an orthogonal frequency division multiplexing OFDM system, where the OFDM system includes a transmit end and a receive end, and the method includes: acquiring, by the receive end, current signal-to-noise ratio values of subcarriers of an OFDM signal transmitted by the transmit end; calculating, by the receive end, a current signal-to-noise-ratio-related value according to the current signal-to-noise ratio values, where the current signal-to-noise-ratio-related value is an operation result obtained by performing a numerical operation on the current signal-to-noise ratio values, and different current signal-to-noise ratio values correspond to a different current signal-to-noise-ratio-related value; acquiring, by the receive end according to the current signal-to-noise-ratio-related value, a current frequency shift value corresponding to the current signal-to-noise-ratio-related value from a linear relationship between a frequency shift value of a center frequency of the OFDM signal and a signal-to-noise-ratio-related value; determining, by the receive end, a frequency adjustment value according to the current frequency shift value, and transmitting the frequency adjustment value to the transmit end; and adjusting, by the transmit end according to the frequency adjustment value, the center frequency of the OFDM signal transmitted by the transmit end.

In a first possible implementation manner of the first aspect, the acquiring, by the receive end from the transmit end, current signal-to-noise ratio values of subcarriers of an OFDM signal specifically includes: acquiring, by the receive end from the transmit end, current signal-to-noise ratio values of low-frequency subcarriers in the subcarriers of the OFDM signal and current signal-to-noise ratio values of high-frequency subcarriers in the subcarriers of the OFDM signal; and the calculating, by the receive end, a current signal-to-noise-ratio-related value according to the current signal-to-noise ratio values specifically includes: calculating, by the receive end, a current signal-to-noise ratio mean of the low-frequency subcarriers according to the signal-to-noise ratio values of the low-frequency subcarriers, calculating a current signal-to-noise ratio mean of the high-frequency subcarriers according to the signal-to-noise ratio values of the high-frequency subcarriers, and using a result as the current signal-to-noise-ratio-related value, where the result is obtained by dividing the current signal-to-noise ratio mean of the low-frequency subcarriers by the current signal-to-noise ratio mean of the high-frequency subcarriers.

In a second possible implementation manner of the first aspect, the acquiring, by the receive end from the transmit end, current signal-to-noise ratio values of subcarriers of an OFDM signal specifically includes: acquiring, by the receive end from the transmit end, current signal-to-noise ratio values of low-frequency subcarriers in the subcarriers of the OFDM signal; and the calculating, by the receive end, a current signal-to-noise-ratio-related value according to the current signal-to-noise ratio values includes: acquiring, by the receive end, the current signal-to-noise-ratio-related value according to the following formula:

$$SNR'_{mean\_w} = \frac{1}{N'} \times \sum_{k'=Lstart'}^{Lend'} 10^{\frac{SNR'_{k'}}{10}} \; ;$$

where $SNR'_{mean\_w}$ is the current signal-to-noise-ratio-related value, N' is a quantity of the low-frequency subcarriers, Lstart' is a starting position of the low-frequency subcarrier, Lend' is an ending position of the low-frequency subcarrier, k' is a positive integer, and $SNR'_{k'}$ is a current signal-to-noise ratio value of each low-frequency subcarrier.

In a third possible implementation manner of the first aspect, the acquiring, by the receive end from the transmit end, current signal-to-noise ratio values of subcarriers of an OFDM signal specifically includes: acquiring, by the receive end from the transmit end, current signal-to-noise ratio values of low-frequency subcarriers in the subcarriers of the OFDM signal; and the calculating, by the receive end, a current signal-to-noise-ratio-related value according to the current signal-to-noise ratio values specifically includes: calculating, by the receive end, a current signal-to-noise ratio mean of the low-frequency subcarriers according to the current signal-to-noise ratio values of the low-frequency subcarriers, and using the current signal-to-noise ratio mean of the low-frequency subcarriers as the current signal-to-noise-ratio-related value.

With reference to the first aspect or any one of the first to the third possible implementation manners of the first aspect, in a fourth possible implementation manner, the determining, by the receive end, a frequency adjustment value according to the current frequency shift value, and transmitting the frequency adjustment value to the transmit end includes: when the receive end determines that an absolute value of the current frequency shift value is less than a first preset threshold and greater than a second preset threshold, using, by the receive end, an additive inverse of the current frequency shift value as the frequency adjustment value, and transmitting the frequency adjustment value to the transmit end, where the first preset threshold is greater than the second preset threshold; and the adjusting, by the transmit end according to the frequency adjustment value, the center frequency of the OFDM signal transmitted by the transmit end includes: adding, by the transmit end, a current center frequency value of the OFDM signal to the frequency adjustment value, to obtain a fixed value, and adjusting the current center frequency value of the OFDM signal to the fixed value.

With reference to the first aspect or any one of the first to the third possible implementation manners of the first aspect, in a fifth possible implementation manner, the determining, by the receive end, a frequency adjustment value according to the current frequency shift value, and transmitting the frequency adjustment value to the transmit end includes: when the receive end determines that an absolute value of the current frequency shift value is greater than or equal to a first preset threshold, and the current frequency shift value is positive, using, by the receive end, an additive inverse of the first preset threshold as the frequency adjustment value, and when the current frequency shift value is negative, using the first preset threshold as the frequency adjustment value; and transmitting the frequency adjustment value to the transmit end; and the adjusting, by the transmit end according to the frequency adjustment value, the center frequency of the OFDM signal transmitted by the transmit end includes: adding, by the transmit end, a current center frequency value of the OFDM signal to the frequency adjustment value, to obtain a fixed value, and adjusting the current center frequency value of the OFDM signal to the fixed value.

With reference to the first aspect or any one of the first to the third possible implementation manners of the first aspect, in a sixth possible implementation manner, the determining, by the receive end, a frequency adjustment value according to the current frequency shift value, and transmitting the frequency adjustment value to the transmit end includes: when the receive end determines that an absolute value of the current frequency shift value is less than or equal to a second preset threshold, continually transmitting different frequency adjustment values to the transmit end, where the frequency adjustment values are set to values between the second preset threshold and an additive inverse of the second preset threshold; and the adjusting, by the transmit end according to the frequency adjustment value, the center frequency of the OFDM signal transmitted by the transmit end includes: adjusting the center frequency of the OFDM signal upwards or downwards according to the frequency adjustment value, till a bit error rate of the OFDM signal acquired by the receive end from the transmit end is the lowest.

With reference to the first aspect or any one of the first to the sixth possible implementation manners of the first aspect, in a seventh possible implementation manner, the receive end acquires the linear relationship in the following manner: adjusting, by the transmit end, the center frequency of the OFDM signal upwards or downwards by using different frequency shift values, where the frequency shift values are set to values between the first preset threshold and an additive inverse of the first preset threshold, and absolute values of the frequency shift values successively increase according to a second preset step length; separately acquiring, by the receive end from the transmit end, signal-to-noise ratio values of multiple subcarrier groups corresponding to the OFDM signal when the different frequency shift values are set; and calculating, by the receive end, a corresponding signal-to-noise-ratio-related value according to signal-to-noise ratio values of each subcarrier group, to obtain multiple signal-to-noise-ratio-related values corresponding to the different frequency shift values, where the signal-to-noise-ratio-related value is an operation result obtained by performing a numerical operation on the signal-to-noise ratio values, and different signal-to-noise ratio values correspond to different signal-to-noise-ratio-related values; and acquiring, by the receive end, the linear relationship between a frequency shift value and a signal-to-noise-ratio-related value in the OFDM system according to a correspondence between a frequency shift value and a signal-to-noise-ratio-related value.

A second aspect provides an orthogonal frequency division multiplexing OFDM system, where the OFDM system includes a transmit end and a receive end, the transmit end includes a laser, and the receive end includes a receiver and a data processing unit, where the receiver of the receive end acquires current signal-to-noise ratio values of subcarriers of an OFDM signal transmitted by the laser of the transmit end; the data processing unit of the receive end calculates a current signal-to-noise-ratio-related value according to the current signal-to-noise ratio values, where the current signal-to-noise-ratio-related value is an operation result obtained by performing a numerical operation on the current signal-to-noise ratio values, and different current signal-to-noise ratio values correspond to a different current signal-to-noise-ratio-related value; the data processing unit of the receive end acquires, according to the current signal-to-noise-ratio-related value, a current frequency shift value corresponding to the current signal-to-noise-ratio-related value from a linear relationship between a frequency shift value of a center frequency of the OFDM signal and a signal-to-noise-ratio-related value; the data processing unit of the receive end determines a frequency adjustment value according to the current frequency shift value, and transmits the frequency adjustment value to a data processing unit of the transmit end; and the data processing unit of the transmit end controls, according to the frequency adjustment value, a control unit to adjust the center frequency of the OFDM signal transmitted by the laser.

In a first possible implementation manner of the second aspect, the receiver of the receive end acquires current signal-to-noise ratio values of low-frequency subcarriers and current signal-to-noise ratio values of high-frequency subcarriers from the subcarriers of the OFDM signal transmitted by the laser of the transmit end; and the data processing unit of the receive end calculates a current signal-to-noise ratio mean of the low-frequency subcarriers according to the signal-to-noise ratio values of the low-frequency subcarriers, calculates a current signal-to-noise ratio mean of the high-frequency subcarriers according to the signal-to-noise ratio values of the high-frequency subcarriers, and uses a result as the current signal-to-noise-ratio-related value, where the result is obtained by dividing the current signal-to-noise ratio mean of the low-frequency subcarriers by the current signal-to-noise ratio mean of the high-frequency subcarriers.

In a second possible implementation manner of the second aspect, the receiver of the receive end acquires current signal-to-noise ratio values of low-frequency subcarriers from the subcarriers of the OFDM signal transmitted by the laser of the transmit end; and the data processing unit of the receive end acquires the current signal-to-noise-ratio-related value according to the following formula:

$$SNR'_{mean\_w} = \frac{1}{N'} \times \sum_{k'=Lstart'}^{Lend'} 10^{\frac{SNR'_{k'}}{10}};$$

where $SNR'_{mean\_w}$ is the current signal-to-noise-ratio-related value, N' is a quantity of the low-frequency subcarriers, Lstart' is a starting position of the low-frequency subcarrier, Lend' is an ending position of the low-frequency subcarrier, k' is a positive integer, and $SNR'_{k'}$ is a current signal-to-noise ratio value of each low-frequency subcarrier.

In a third possible implementation manner of the second aspect, the receiver of the receive end acquires current signal-to-noise ratio values of low-frequency subcarriers from the subcarriers of the OFDM signal transmitted by the laser of the transmit end; and the data processing unit of the receive end calculates a current signal-to-noise ratio mean of the low-frequency subcarriers according to the current signal-to-noise ratio values of the low-frequency subcarriers, and uses the current signal-to-noise ratio mean of the low-frequency subcarriers as the current signal-to-noise-ratio-related value.

With reference to the second aspect or any one of the first to the third possible implementation manners of the second aspect, in a fourth possible implementation manner, the transmit end further includes the data processing unit and the control unit, and the data processing unit, the control unit, and the laser of the transmit end are connected in sequence; when the data processing unit of the receive end determines that an absolute value of the current frequency shift value is less than a first preset threshold and greater than a second preset threshold, the data processing unit of the receive end uses an additive inverse of the current frequency shift value as the frequency adjustment value, and transmits the frequency adjustment value to the data processing unit of the transmit end, where the first preset threshold is greater than the second preset threshold; the data processing unit of the transmit end adds a current center frequency value of the OFDM signal to the current frequency adjustment value, to obtain a fixed value; and the control unit of the transmit end controls the laser to adjust the current center frequency value of the OFDM signal to the fixed value.

With reference to the second aspect or any one of the first to the third possible implementation manners of the second aspect, in a fifth possible implementation manner, the transmit end further includes the data processing unit and the control unit, and the data processing unit, the control unit, and the laser of the transmit end are connected in sequence; when determining that an absolute value of the current frequency shift value is greater than or equal to a first preset threshold, and the current frequency shift value is positive, the data processing unit of the receive end uses an additive inverse of the first preset threshold as the current frequency shift value, and when the current frequency shift value is negative, uses the first preset threshold as the current frequency shift value, and transmits the current frequency shift value to the data processing unit of the transmit end; the data processing unit of the transmit end adds a current center frequency value of the OFDM signal to the current frequency shift value, to obtain a fixed value; and the control unit of the transmit end controls the laser to adjust the current center frequency value of the OFDM signal to the fixed value.

With reference to the second aspect or any one of the first to the third possible implementation manners of the second aspect, in a sixth possible implementation manner, the transmit end further includes the data processing unit and the control unit, and the data processing unit, the control unit, and the laser of the transmit end are connected in sequence; when determining that an absolute value of the current frequency shift value is less than or equal to a second preset threshold, the data processing unit of the receive end continually transmits different frequency adjustment values to the data processing unit of the transmit end, where the frequency adjustment values are set to values between the second preset threshold and an additive inverse of the second preset threshold, and absolute values of the frequency adjustment values successively increase according to a first preset step length; and the control unit of the transmit end adjusts upwards or downwards, according to the frequency adjustment value, the center frequency of the OFDM signal transmitted by the laser, till a bit error rate of the OFDM signal received by the receiver of the receive end from the transmit end is the lowest.

With reference to the second aspect or any one of the first to the sixth possible implementation manners of the second aspect, in a seventh possible implementation manner, the control unit of the transmit end adjusts upwards or downwards, by using different frequency shift values, the center frequency of the OFDM signal transmitted by the laser, where the frequency shift values are set to values between the first preset threshold and an additive inverse of the first preset threshold; the receiver of the receive end separately acquires signal-to-noise ratio values of multiple subcarrier groups corresponding to the OFDM signal when the different frequency shift values are set, where the OFDM signal is transmitted by the laser of the transmit end; and the data processing unit of the receive end calculates a corresponding signal-to-noise-ratio-related value according to signal-to-noise ratio values of each subcarrier group, to obtain multiple signal-to-noise-ratio-related values corresponding to different frequency shift values, where the signal-to-noise-ratio-related value is an operation result obtained by performing a numerical operation on the signal-to-noise ratio values, and different signal-to-noise ratio values correspond to different signal-to-noise-ratio-related values; and the data processing unit of the receive end acquires a linear relationship between a frequency shift value and a signal-to-noise-ratio-related value in the OFDM system according to a correspondence between a frequency shift value and a signal-to-noise-ratio-related value, and stores the linear relationship.

In the foregoing disclosed content, the present invention discloses an OFDM system and a center frequency adjustment method thereof. A receive end first acquires a linear relationship between a frequency shift value and a signal-to-noise-ratio-related value in the OFDM system, acquires a current signal-to-noise-ratio-related value, and searches, according to the current signal-to-noise-ratio-related value, the linear relationship for a corresponding current frequency shift value. The current frequency shift value can be acquired according to the current signal-to-noise-ratio-related value and the linear relationship, and the current signal-to-noise-ratio-related value can be obtained by performing calculation on current signal-to-noise ratio values; therefore, in the present invention, a center frequency shift value of an OFDM signal can be acquired, and a center frequency of the OFDM signal transmitted by a transmit end can be adjusted according to the center frequency shift value, to fix the center frequency, thereby ensuring performance stability of the OFDM system.

**BRIEF DESCRIPTION OF DRAWINGS**

FIG. 1 shows an SNR curve after an OFDM signal passes through an optical fiber in an OFDM system;
FIG. 2 is a schematic diagram of a method for implementing single sideband filtering on an OFDM signal in an OFDM system;
FIG. 3 is a schematic diagram of a curve showing a relationship between a frequency shift and a bit error rate;
FIG. 4 shows impact of a center frequency drift of a laser on an OFDM single sideband system;
FIG. 5 shows impact of a center frequency drift of a filtering window on an OFDM single sideband system;
FIG. 6 is a schematic structural diagram of a system of a first embodiment of an orthogonal frequency division multiplexing OFDM system of the present invention;

FIG. 7 is a flowchart of an exemplary embodiment of acquiring a linear relationship between a frequency shift value and a signal-to-noise-ratio-related value of an OFDM signal in an OFDM system;

FIG. 8 is a schematic diagram of a curve showing a relationship between a frequency shift value and a signal-to-noise ratio mean of low-frequency subcarriers according to an embodiment of the present invention;

FIG. 9 is a flowchart of a first embodiment of a center frequency adjustment method of an orthogonal frequency division multiplexing OFDM system of the present invention;

FIG. 10 is a schematic structural diagram of a system of a second embodiment of an orthogonal frequency division multiplexing OFDM system of the present invention;

FIG. 11 is a schematic structural diagram of a system of a third embodiment of an orthogonal frequency division multiplexing OFDM system of the present invention;

FIG. 12 is a flowchart of a second embodiment of a center frequency adjustment method of an orthogonal frequency division multiplexing OFDM system of the present invention; and

FIG. 13 is a specific flowchart of steps for fine adjustment in a second embodiment of a center frequency adjustment method of an orthogonal frequency division multiplexing OFDM system of the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

First referring to FIG. 6, FIG. 6 is a schematic structural diagram of a system of a first embodiment of an orthogonal frequency division multiplexing OFDM system of the present invention. The OFDM system includes a transmit end 50 and a receive end 60, the transmit end 50 is connected to the receive end 60, the transmit end 50 generates an OFDM signal and transmits the OFDM signal to the receive end 60, and the receive end 60 generates a frequency adjustment value and transmits the frequency adjustment value to the transmit end 50 (which will be described in detail below).

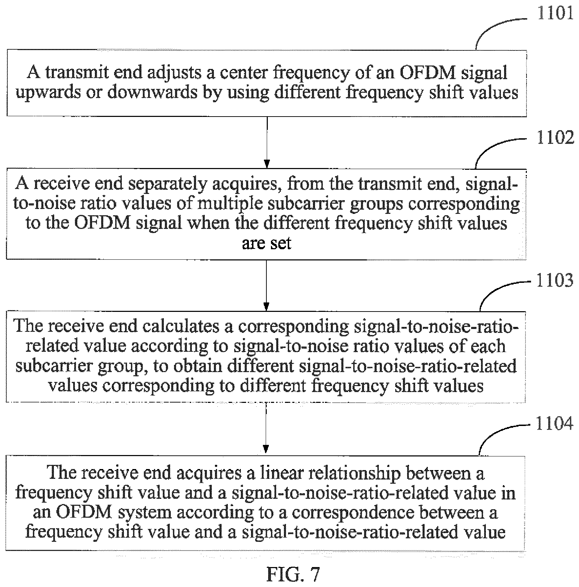

Based on the foregoing system, an embodiment of the present invention provides a center frequency adjustment method of an orthogonal frequency division multiplexing OFDM system. Before the method is used, the receive end 60 prestores a linear relationship between a frequency shift value and a signal-to-noise-ratio-related value of an OFDM signal in an OFDM system. For clear description of the embodiment of the present invention, a method for acquiring the linear relationship is first introduced below. Referring to FIG. 7, FIG. 7 is a flowchart of an exemplary embodiment of acquiring a linear relationship between a frequency shift value and a signal-to-noise-ratio-related value of an OFDM signal in an OFDM system. As shown in FIG. 7, the method for acquiring the linear relationship includes the following steps:

Step 1101: The transmit end 50 adjusts a center frequency of an OFDM signal upwards or downwards by using different frequency shift values, where the frequency shift values are set to values between a first preset threshold and an additive inverse of the first preset threshold, and absolute values of the frequency shift values successively increase according to a second preset step length.

Step 1102: The receive end 60 separately acquires, from the transmit end 50, signal-to-noise ratio values of multiple subcarrier groups corresponding to the OFDM signal when the different frequency shift values are set.

Step 1103: The receive end 60 calculates a corresponding signal-to-noise-ratio-related value according to signal-to-noise ratio values of each subcarrier group, where the signal-to-noise-ratio-related value is an operation result obtained by performing a numerical operation on the signal-to-noise ratio values, and different signal-to-noise ratio values correspond to different signal-to-noise-ratio-related values.

Step 1104: The receive end 60 acquires the linear relationship between a frequency shift value and a signal-to-noise-ratio-related value in the OFDM system according to a correspondence between a frequency shift value and a signal-to-noise-ratio-related value.

It is assumed that a quantity of subcarriers of the OFDM signal generated by the transmit end 50 is SC, and a zero-frequency component is not included, where SC is a positive integer and SC>=2. Hstart is set as a starting position of a high-frequency subcarrier in the SC subcarriers, and Hend is set as an ending position of the high-frequency subcarrier, so that a parameter range and relationship are as follows:

$$\frac{SC}{2} <= \text{Hstart}$$

Hstart <= Hend
Hend <= SC
where M is a quantity of the high-frequency subcarriers, and M = Hend - Hstart + 1.

Lstart is set as a starting position of a low-frequency subcarrier, and Lend is set as an ending position of the low-frequency subcarrier, so that a parameter range and relationship are as follows:

1<= Lstart
Lstart <= Lend

$$\text{Lend} < \frac{SC}{2}$$

where N is a quantity of the low-frequency subcarriers, and N = Lend - Lstart + 1.

In the embodiment of the present invention, the signal-to-noise-ratio-related value disclosed in step 1103 may specifically include three types, which are separately as follows:

1. The signal-to-noise-ratio-related value is a result obtained by dividing a signal-to-noise ratio mean of the low-frequency subcarriers by a signal-to-noise ratio mean of the high-frequency subcarriers.
Specifically, the receive end 60 may calculate a corresponding signal-to-noise ratio mean of low-frequency subcarriers according to signal-to-noise ratio values of the low-frequency subcarriers in each subcarrier group, calculate a corresponding signal-to-noise ratio mean of high-frequency subcarriers according to signal-to-noise ratio values of the high-frequency subcarriers in each subcarrier group, and use a result as the signal-to-noise-ratio-related value, where the result is obtained by dividing the signal-to-noise ratio mean of the low-frequency subcarriers by the signal-to-noise ratio mean of the high-frequency subcarriers, to obtain multiple signal-to-noise-ratio-related values corresponding to different frequency shift values.
Specifically, in such a case, a formula used for calculating the signal-to-noise-ratio-related value is as follows:

$$Ratio_{H2L} = \frac{\frac{1}{M}\sum_{l=Hstart}^{Hend} SNR_l}{\frac{1}{N}\sum_{k=Lstart}^{Lstart+N-1} SNR_k} \quad (1)$$

where $Ratio_{H2L}$ is the signal-to-noise-ratio-related value. Specifically, in step 1102, the receive end 60 separately acquires, from the transmit end 50, signal-to-noise ratio values of multiple low-frequency subcarrier groups corresponding to the OFDM signal when different frequency shift values are set, and in step 1103, the receive end 60 calculates $Ratio_{H2L}$ according to Formula (1) and uses $Ratio_{H2L}$ as the signal-to-noise-ratio-related value.
2. The signal-to-noise-ratio-related value is a mean of 10 raised to a power equal to a signal-to-noise ratio value of a low-frequency subcarrier in each low-frequency subcarrier group divided by 10, and the signal-to-noise-ratio-related value is defined by using the following formula:

$$SNR_{mean\_w} = \frac{1}{N} \times \sum_{k=Lstart}^{Lend} 10^{\frac{SNR_k}{10}} \quad (2)$$

where $SNR_{mean\_w}$ is the signal-to-noise-ratio-related value, N is a quantity of the low-frequency subcarriers in each low-frequency subcarrier group, Lstart is a starting position of the low-frequency subcarrier in each low-frequency subcarrier group, Lend is an ending position of the low-frequency subcarrier in each low-frequency subcarrier group, k is a positive integer, and $SNR_k$ is a signal-to-noise ratio value of each low-frequency subcarrier in each low-frequency subcarrier group.

Specifically, in step 1102, the receive end 60 separately acquires, from the transmit end 50, signal-to-noise ratio values of multiple low-frequency subcarrier groups corresponding to the OFDM signal when different frequency shift values are set, and in step 1103, the receive end 60 acquires $SNR_{mean\_w}$ according to Formula (2) and uses $SNR_{mean\_w}$ as the signal-to-noise-ratio-related value.

3. The signal-to-noise-ratio-related value is a signal-to-noise ratio mean of the low-frequency subcarriers.

Specifically, in step 1102, the receive end 60 separately acquires, from the transmit end 50, signal-to-noise ratio values of multiple low-frequency subcarrier groups corresponding to the OFDM signal when different frequency shift values are set; and in step 1103, the receive end 60 calculates a corresponding signal-to-noise ratio mean of the low-frequency subcarriers according to the signal-to-noise ratio values of the low-frequency subcarriers in each low-frequency subcarrier group, and uses the signal-to-noise ratio mean of the low-frequency subcarriers as the signal-to-noise-ratio-related value, to obtain multiple signal-to-noise-ratio-related values corresponding to different frequency shift values. A formula is expressed as follows:

$$SNR_{mean\_dB} = \frac{1}{N} \sum_{k=Lstart}^{Lend} SNR_k \quad (3)$$

where $SNR_{mean\_dB}$ is the signal-to-noise-ratio-related value.

The foregoing three types of signal-to-noise-ratio-related values all have a linear relationship with a frequency shift value of the OFDM signal.

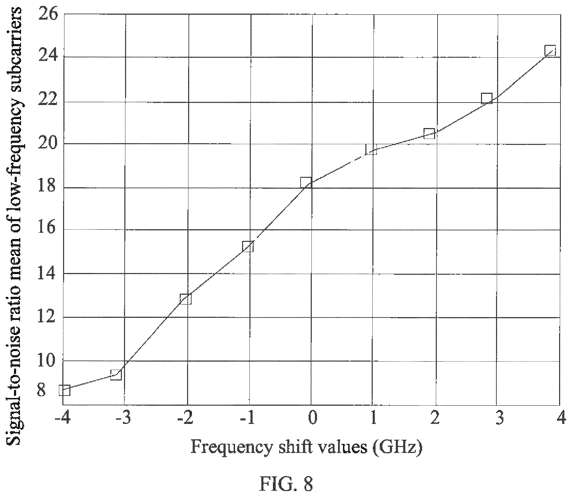

The linear relationship between a frequency shift value and a signal-to-noise-ratio-related value is described below by using the third type of signal-to-noise-ratio-related value (that is, the signal-to-noise-ratio-related value is a signal-to-noise ratio mean of the low-frequency subcarriers) as an example. Referring to FIG. 8, FIG. 8 shows a curve showing a relationship that is between a frequency shift value and a signal-to-noise ratio mean of the low-frequency subcarriers and that is obtained according to nine sets of data. In FIG. 8, a horizontal coordinate represents a frequency shift value, a vertical coordinate represents a signal-to-noise ratio mean of the low-frequency subcarriers, and the nine sets of data are as follows: (-4, 8), (-3, 9), (-2, 12.8), (-1, 15.3), (0, 18.2), (1, 19.7), (2, 20.4), (3, 22.3), and (4, 24.5).

As can be seen from the nine sets of data, there is a linear relationship between a frequency shift value and a signal-to-noise-ratio mean of low-frequency subcarriers. A manner of acquiring the linear relationship is as follows: acquiring a slope K by using any two sets of data in the foregoing nine sets of data, substituting K, and a value of x and a value of y of either set of data in the two sets of data into a formula: y=K*x+Y, to obtain a value of Y, so as to acquire the linear relationship: y=K*x+Y, where the value of x and the value of y are variables, and the value of K and the value of Y are constants.

It should be noted that, there is also a linear relationship between a signal-to-noise-ratio-related values in the first or second case and a frequency shift value, and the linear relationship between a signal-to-noise-ratio-related value in the first or second case and a frequency shift value may also be acquired according to a similar algorithm.

It should be noted that, the foregoing method is merely an exemplary embodiment of acquiring a linear relationship of the present invention. Any embodiment, in which a linear relationship between a signal-to-noise-ratio-related value and a frequency shift value can be acquired, conceivable by a person skilled in the art according to the revelation of the foregoing embodiment can be applied in the present invention.

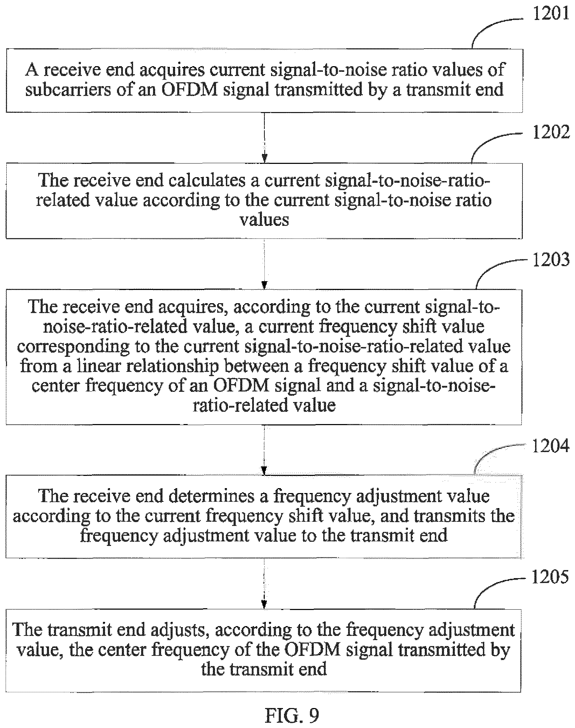

Therefore, on the premise that the linear relationship is acquired, an embodiment of the present invention provides a center frequency adjustment method of an orthogonal frequency division multiplexing OFDM system. A basic concept of the method is as follows: A receive end 60 calculates a current signal-to-noise-ratio-related value of subcarriers, acquires a current frequency shift value from the foregoing acquired linear relationship according to the current signal-to-noise-ratio-related value, and then detects whether a frequency shift occurs in a center frequency of an OFDM signal; and if detecting that a frequency shift has occurred, determines a frequency adjustment value according to the current frequency shift value and transmits the frequency adjustment value to a transmit end 50; the transmit end 50 adjusts, according to the frequency adjustment value, the center frequency of the OFDM signal transmitted by the transmit end 50. For details, reference may be made to FIG. 9. FIG. 9 is a flowchart of a first embodiment of a center frequency adjustment method of an orthogonal frequency division multiplexing OFDM system of the present invention, and as shown in FIG. 9, the method includes the following steps.

Step 1201: The receive end 60 acquires current signal-to-noise ratio values of subcarriers of an OFDM signal transmitted by the transmit end 50.

Step 1202: The receive end 60 calculates a current signal-to-noise-ratio-related value according to the current signal-to-noise ratio values, where the current signal-to-noise-ratio-related value is an operation result obtained by performing a numerical operation on the current signal-to-noise ratio values, and different current signal-to-noise ratio values correspond to a different current signal-to-noise-ratio-related value.

Step 1203: The receive end 60 acquires, according to the current signal-to-noise-ratio-related value, a current frequency shift value corresponding to the current signal-to-noise-ratio-related value from the linear relationship between a frequency shift value of a center frequency of the OFDM signal and a signal-to-noise-ratio-related value.

Step 1204: The receive end 60 determines a frequency adjustment value according to the current frequency shift value, and transmits the frequency adjustment value to the transmit end 50.

Step 1205: The transmit end 50 adjusts, according to the frequency adjustment value, the center frequency of the OFDM signal transmitted by the transmit end 50.

Specifically, corresponding to three different types of signal-to-noise-ratio-related values, the following three manners may be used to perform corresponding processing.

In a first manner, when the signal-to-noise-ratio-related value is a result obtained by dividing a signal-to-noise ratio mean of low-frequency subcarriers by a signal-to-noise ratio mean of high-frequency subcarriers, in step 1201, the receive end 60 acquires, from the transmit end 50, current signal-to-noise ratio values of low-frequency subcarriers in the subcarriers of the OFDM signal and current signal-to-noise ratio values of high-frequency subcarriers in the subcarriers of the OFDM signal; in step 1202, the receive end 60 calculates a current signal-to-noise ratio mean of the low-frequency subcarriers according to the signal-to-noise ratio values of the low-frequency subcarriers, calculates a current signal-to-noise ratio mean of the high-frequency subcarriers according to the signal-to-noise ratio values of the high-frequency subcarriers, and uses a result as a current signal-to-noise-ratio-related value, where the result is obtained by dividing the current signal-to-noise ratio mean of the low-frequency subcarriers by the current signal-to-noise ratio mean of the high-frequency subcarriers. In step 1203, the receive end 60 acquires, according to the current signal-to-noise-ratio-related value, the current frequency shift value corresponding to the current signal-to-noise-ratio-related value from the linear relationship between a frequency shift value of a center frequency of the OFDM signal and a signal-to-noise-ratio-related value. Specifically, the current signal-to-noise-ratio-related value may be used as a value of y and substituted into a formula y=K*x+Y, to obtain the current frequency shift value x.

In a second manner, when the signal-to-noise-ratio-related value is $SNR_{mean\_w}$, in step 1201, the receive end 60 acquires, from the transmit end 50, current signal-to-noise ratio values of the low-frequency subcarriers in the subcarriers of the OFDM signal; and in step 1201, the receive end 60 acquires the current signal-to-noise-ratio-related value according to the following formula.

$$SNR'_{mean\_w} = \frac{1}{N'} \times \sum_{k'=Lstart'}^{Lend'} 10^{\frac{SNR'_{k'}}{10}} \qquad (4)$$

where $SNR'_{mean\_w}$ is the current signal-to-noise-ratio-related value, N' is a quantity of the low-frequency subcarriers, Lstart' is a starting position of the low-frequency subcarrier, Lend' is an ending position of the low-frequency subcarrier, k' is a positive integer, and $SNR'_{k'}$ is a current signal-to-noise ratio value of each low-frequency subcarrier. In step 1203, the receive end 60 searches, according to the current signal-to-noise-ratio-related value $SNR'_{mean\_w}$, the linear relationship between a frequency shift value and a signal-to-noise-ratio-related value in the OFDM system for the current frequency shift value corresponding to the current signal-to-noise-ratio-related value. Specifically, the current signal-to-noise-ratio-related value $SNR'_{mean\_w}$ may be used as a value of y and substituted into the formula y=K*x+Y, to obtain the current frequency shift value x.

In a third manner, when the signal-to-noise-ratio-related value is a signal-to-noise ratio mean of low-frequency subcarriers, in step 1201, the receive end 60 acquires, from the transmit end 50, current signal-to-noise ratio values of low-frequency subcarriers in the subcarriers of the OFDM signal; and in step 1202, the receive end 60 calculates a current signal-to-noise ratio mean of the low-frequency subcarriers according to the signal-to-noise ratio values of the low-frequency subcarriers, and uses the current signal-to-noise ratio mean of the low-frequency subcarriers as the current signal-to-noise-ratio-related value. In step 1203, the receive end 60 calculates a current signal-to-noise ratio mean of the low-frequency subcarriers according to the current signal-to-noise ratio values of the low-frequency subcarriers, and uses the current signal-to-noise ratio mean of the low-frequency subcarriers as the current signal-to-noise-ratio-related value. Specifically, the current signal-to-noise-ratio-related value may be used as a value of y and substituted into the formula y=K*x+Y, to obtain the current frequency shift value x.

Optionally, in the embodiment of the present invention, a first preset threshold and a second preset threshold are set for the current frequency shift value, and the first preset threshold and the second preset threshold may be set according to actual requirements. The first preset threshold is used to indicate a frequency shift value range in a linear relationship, and the second preset threshold is defined to be a smaller value and is used to indicate a fine adjustment range. For example, the first preset threshold may be 4 GHZ, which indicates that a frequency shift value range in a linear relationship is from -4 GHZ to 4 GHZ; the second preset threshold is less than the first preset threshold, and a specific value thereof may be, for example, 0.5 GHZ. If the frequency shift value ranges from -0.5 GHZ to 0.5 GHZ, fine adjustment may be performed on the center frequency of the OFDM signal, which is described in detail below.

In step 1204, when the receive end 60 determines that an absolute value of the current frequency shift value is greater than or equal to the first preset threshold, and the current frequency shift value is positive, the receive end 60 uses an additive inverse of the first preset threshold as a frequency adjustment value; and when the current frequency shift value is negative, uses the first preset threshold as a frequency adjustment value, and transmits the frequency adjustment value to the transmit end 50. Correspondingly, in this case, in step 1205, the transmit end 60 adds a current center frequency value of the OFDM signal to an additive inverse of the frequency adjustment value, to obtain a fixed value, and adjusts the current center frequency value of the OFDM signal to the fixed value.

For example, assuming that the current center frequency value of the OFDM signal is 20 GHZ, if the current frequency shift value acquired according to the linear relationship is 5 GHZ, the receive end 60 determines that |5GHZ| > 4GHZ, and because 5 GHZ is positive, in this case, the receive end 60 uses an additive inverse of the first preset threshold 5 GHZ as a frequency adjustment value, and transmits the frequency adjustment value to the transmit end 50. The transmit end 50 adds the current center frequency value 20 GHZ of the OFDM signal to the frequency adjustment value -5 GHZ, to obtain a fixed value 15 GHZ, and adjusts the current center frequency 20 GHZ of the OFDM signal to the fixed value 15 GHZ.

Assuming that the current center frequency value of the OFDM signal is 10 GHZ, if the current frequency shift value acquired according to the linear relationship is -6 GHZ, the receive end 60 determines that |-6GHZ| > 4GHZ, and because -6 GHZ is negative, in this case, the receive end 60 uses the first preset threshold 5 GHZ as a frequency adjustment value, and transmits the frequency adjustment value to the transmit end 50. The transmit end 50 adds the current center frequency value 10 GHZ of the OFDM signal to the frequency adjustment value 5 GHZ, to obtain a fixed value 15 GHZ, and adjusts the current center frequency 10 GHZ of the OFDM signal to the fixed value 15 GHZ.

Therefore, when the absolute value of the current frequency shift value is greater than or equal to the first preset threshold, regardless of whether the current frequency shift value is positive or negative, the transmit end 50 can always adjust the current center frequency value of the OFDM signal to the fixed value 15 GHZ.

When the absolute value of the current frequency shift value is greater than or equal to the first preset threshold, it indicates that the current frequency shift value does not fall within the frequency shift value range in the linear relationship. Therefore, in the embodiment of the present invention, the first preset threshold or an additive inverse of the first preset threshold is set as the frequency adjustment value, that is, a maximum frequency shift value in the linear relationship is used as the frequency adjustment value; in this way, which avoids an error caused by use of a current frequency shift value beyond the frequency shift value range in the linear relationship, thereby further improving the accuracy of frequency adjustment.

In step 1204, when the receive end 60 determines that an absolute value of the current frequency shift value is less than the first preset threshold and greater than the second preset threshold, the receive end 60 uses an additive inverse of the current frequency shift value as a frequency adjustment value, and transmits the frequency adjustment value to the transmit end 50. Correspondingly, in this case, in step 1205, the transmit end 50 adds a current center frequency value of the OFDM signal to the frequency adjustment value, to obtain a fixed value, and adjusts the current center frequency value of the OFDM signal to the fixed value.

For example, assuming that the current center frequency value of the OFDM signal is 18 GHZ, if the current frequency shift value acquired according to the linear relationship is 3 GHZ, the receive end 60 determines that |3GHZ| < 4GHZ, and in this case, the receive end 60 uses an additive inverse of the first preset threshold 3 GHZ as a frequency adjustment value, and transmits the frequency adjustment value to the transmit end 50. The transmit end 50 adds the current center frequency value 18 GHZ of the OFDM signal to the frequency adjustment value -3 GHZ, to obtain a fixed value 15 GHZ, and adjusts the current center frequency 18 GHZ of the OFDM signal to the fixed value 15 GHZ.

Assuming that the current center frequency value of the OFDM signal is 12 GHZ, if the current frequency shift value acquired according to the linear relationship is -3 GHZ, the receive end 60 determines that |-3GHZ| < 4GHZ, and in this case, the receive end 60 uses an additive inverse of the first preset threshold -3 GHZ as a frequency adjustment value, and transmits the frequency adjustment value to the transmit end 50. The transmit end 50 adds the current center frequency value 12 GHZ of the OFDM signal to the frequency adjustment value 3 GHZ, to obtain a fixed value 15 GHZ, and adjusts the current center frequency 18 GHZ of the OFDM signal to the fixed value 15 GHZ.

Because the absolute value of the current frequency shift value is less than the first preset threshold and greater than the second preset threshold, it indicates that the current frequency shift value falls within the frequency shift value range in the linear relationship; therefore, in the embodiment of the present invention, an additive inverse of the current frequency shift value is used as the frequency adjustment value, so that the transmit end 50 can compensate for and correct, according to the frequency adjustment value, the current center frequency value of the OFDM signal in which a frequency shift has occurred; in this way, the current center frequency value of the OFDM signal is fixed at the fixed value.

In step 1205, when determining that an absolute value of the current frequency shift value is less than or equal to a second preset threshold, the receive end 60 continually transmits different frequency adjustment values to the transmit end 50, where the frequency adjustment values are set to values between the second preset threshold and an additive inverse of the second preset threshold. Correspondingly, in this case, in step 1206, the transmit end 50 adjusts the center frequency of the OFDM signal upwards or downwards according to the frequency adjustment value, till a bit error rate of the OFDM signal acquired by the receive end 60 from the transmit end 50 is the lowest.

For example, assuming that the current center frequency value of the OFDM signal is 15.03 GHZ, if the current frequency shift value acquired according to the linear relationship is 0.03 GHZ, the receive end 60 determines that |0.03GHZ| < 0.5GHZ, and in this case, the receive end 60 continually transmits different frequency adjustment values (for example, 0.01 GHZ, -0.01 GHZ, 0.02 GHZ, -0.02 GHZ, 0.03 GHZ, -0.03 GHZ, 0.04 GHZ, and -0.04 GHZ) to the transmit end 50, where the frequency adjustment values are set to values between the second preset threshold and an additive inverse of the second preset threshold (that is, from -0.5 to 0.5). In addition, preferably, the absolute values of the frequency adjustment values increase by using a second step length as a unit; and in this embodiment, the second step length is 0.01. The transmit end 50 adjusts the center frequency of the OFDM signal upwards or downwards according to the frequency adjustment value; when determining that a bit error rate of the OFDM signal acquired from the transmit end 50 is the lowest, the receive end 60 records a corresponding frequency adjustment value in this case. In this embodiment, assuming that the frequency adjustment value corresponding to the lowest bit error rate of the OFDM signal is -0.03 GHZ, the transmit end 50 adjusts the center frequency of the OFDM signal according to the frequency adjustment value -0.03 GHZ, and may specifically add 15.03 GHZ to -0.03 GHZ to obtain an adjusted center frequency 15 GHZ of the OFDM signal. Because the bit rate error of the OFDM signal acquired by the receive end 60 from the transmit end 50 is the lowest when the frequency adjustment value is set to -0.03 GHZ among bit error rates acquired when other frequency adjustment values are set, an effect of performing fine adjustment on the OFDM signal to fix the center frequency at 15 GHZ is achieved.

Therefore, in the embodiment of the present invention, a linear relationship between a frequency shift value and a signal-to-noise-ratio-related value in an OFDM system is first acquired, and then a current signal-to-noise-ratio-related value is acquired, and the linear relationship is searched according to the current signal-to-noise-ratio-related value for a corresponding current frequency shift value. In this way, a shift of a center frequency of an OFDM signal can be identified and adjusted, thereby ensuring stability of system performance.

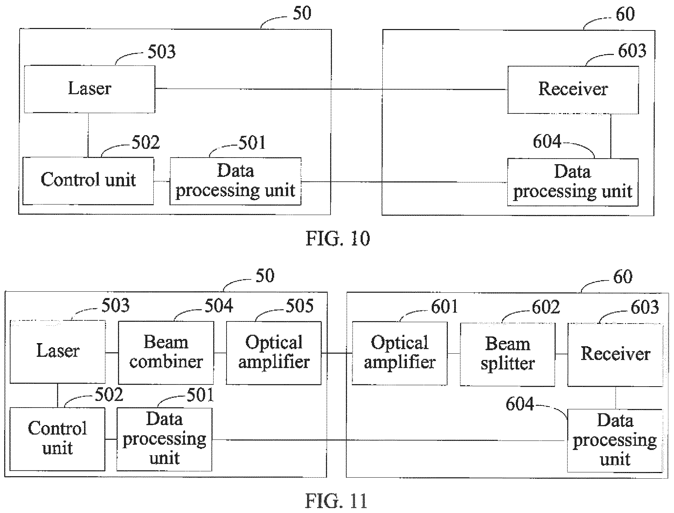

Referring to FIG. 10, FIG. 10 is a schematic structural diagram of a system of a second embodiment of an orthogonal frequency division multiplexing OFDM system. As shown in FIG. 10:

The OFDM system includes a transmit end 50 and a receive end 60, the transmit end 50 includes a laser 503 and a data processing unit 501, the receive end 60 includes a receiver 603 and a data processing unit 604, and the data processing unit 501 of the transmit end 50 is in a data connection with the data processing unit 604 of the receive end 60.

Specifically, in the OFDM system, a linear relationship between a frequency shift value of a center frequency of an OFDM signal and a signal-to-noise-ratio-related value may be acquired in advance in the following manners.

A control unit 502 of the transmit end 50 adjusts upwards or downwards, by using different frequency shift values, a center frequency of an OFDM signal transmitted by the laser 503, where the frequency shift values are set to values between a first preset threshold and an additive inverse of the first preset value.

The receiver 603 of the receive end 60 separately acquires signal-to-noise ratio values of multiple subcarrier groups corresponding to the OFDM signal when different frequency shift values are set, where the OFDM signal is transmitted by the laser 503 of the transmit end 50.

The data processing unit 604 of the receive end 60 calculates a corresponding signal-to-noise-ratio-related value according to signal-to-noise ratio values of each subcarrier group, to obtain multiple signal-to-noise-ratio-related values corresponding to different frequency shift values, where the signal-to-noise-ratio-related value is an operation result obtained by performing a numerical operation on the signal-to-noise ratio values, and different signal-to-noise ratio values correspond to different signal-to-noise-ratio-related values.

The data processing unit 604 of the receive end 60 acquires the linear relationship between a frequency shift value and a signal-to-noise-ratio-related value in the OFDM system according to a correspondence between a frequency shift value and a signal-to-noise-ratio-related value, and stores the linear relationship.

The signal-to-noise-ratio-related value may specifically be as follows:

1. The signal-to-noise-ratio-related value is a result obtained by dividing a signal-to-noise ratio mean of the low-frequency subcarriers by a signal-to-noise ratio mean of the high-frequency subcarriers.

Specifically, the data processing unit 604 of the receive end 60 may calculate a corresponding signal-to-noise ratio mean of low-frequency subcarriers according to signal-to-noise ratio values of the low-frequency subcarriers in each subcarrier group, calculate a corresponding signal-to-noise ratio mean of high-frequency subcarriers according to signal-to-noise ratio values of the high-frequency subcarriers in each subcarrier group, and use a result as the signal-to-noise-ratio-related value, where the result is obtained by dividing the signal-to-noise ratio mean of the low-frequency subcarriers by the signal-to-noise ratio mean of the high-frequency subcarriers, to obtain multiple signal-to-noise-ratio-related values corresponding to different frequency shift values.

Specifically, in such a case, a formula used for calculating the signal-to-noise-ratio-related value is as follows:

$$Ratio_{H2L} = \frac{\frac{1}{M}\sum_{l=Hstart}^{Hend} SNR_l}{\frac{1}{N}\sum_{k=Lstart}^{Lstart+N-1} SNR_k} \quad (1)$$

where $Ratio_{H2L}$ is the signal-to-noise-ratio-related value. Specifically, the data processing unit 604 of the receive end 60 separately acquires, from the receiver 603, signal-to-noise ratio values of multiple low-frequency subcarrier groups corresponding to the OFDM signal with different frequency shift values, and in the step, acquires $SNR_{mean\_w}$ according to Formula (2) and uses $SNR_{mean\_w}$ as the signal-to-noise-ratio-related value.

2. The signal-to-noise-ratio-related value is a mean of 10 raised to a power equal to a signal-to-noise ratio value of a low-frequency subcarrier in each low-frequency subcarrier group divided by 10, and the signal-to-noise-ratio-related value is defined by using the following formula:

$$SNR_{mean\_w} = \frac{1}{N} \times \sum_{k=Lstart}^{Lend} 10^{\frac{SNR_k}{10}} \quad (2)$$

where $SNR_{mean\_w}$ is the signal-to-noise-ratio-related value, N is a quantity of the low-frequency subcarriers in each low-frequency subcarrier group, Lstart is a starting position of the low-frequency subcarrier in each low-frequency subcarrier group, Lend is an ending position of the low-frequency subcarrier in each low-frequency subcarrier group, k is a positive integer, and $SNR_k$ is a signal-to-noise ratio value of each low-frequency subcarrier in each low-frequency subcarrier group.

The data processing unit 604 of the receive end 60 separately acquires, from the receiver 603, signal-to-noise ratio values of multiple low-frequency subcarrier groups corresponding to the OFDM signal with different frequency shift values, and acquires $SNR_{mean\_w}$ according to Formula (2) and uses $SNR_{mean\_w}$ as the signal-to-noise-ratio-related value.

3. The signal-to-noise-ratio-related value is a signal-to-noise ratio mean of the low-frequency subcarriers.

The data processing unit 604 of the receive end 60 separately acquires, from the receiver 603, signal-to-noise ratio values of multiple low-frequency subcarrier groups corresponding to the OFDM signal with different frequency shifts, and in the step, the data processing unit 604 of the receive end 60 calculates a corresponding signal-to-noise ratio mean of the low-frequency subcarriers according to the signal-to-noise ratio values of the low-frequency subcarriers in each low-frequency subcarrier group, and uses the signal-to-noise ratio mean of the low-frequency subcarriers as the signal-to-noise-ratio-related value, to obtain multiple signal-to-noise-ratio-related values corresponding to different frequency shift values. A formula is expressed as follows:

$$SNR_{mean\_dB} = \frac{1}{N}\sum_{k=Lstart}^{Lend} SNR_k \quad (3)$$

where $SNR_{mean\_dB}$ is the signal-to-noise-ratio-related value.

The linear relationship between a frequency shift value and a signal-to-noise-ratio-related value is described below by using a third type of the signal-to-noise-ratio-related value (that is, the signal-to-noise-ratio-related value is a signal-to-noise ratio mean of the low-frequency subcarriers) as an example. Referring to FIG. 8, FIG. 8 shows a curve showing a relationship that is between a frequency shift value and a signal-to-noise ratio mean of the low-frequency subcarriers and that is obtained according to nine sets of data. In FIG. 8, a horizontal coordinate represents a frequency shift value, a vertical coordinate represents a signal-to-noise ratio mean of the low-frequency subcarriers, and the nine sets of data are as follows: (-4, 8), (-3, 9), (-2, 12.8), (-1, 15.3), (0, 18.2), (1, 19.7), (2, 20.4), (3, 22.3), and (4, 24.5).

As can be seen from the nine sets of data, there is a linear relationship between a frequency shift value and a signal-to-noise-ratio mean of low-frequency subcarriers. A manner of acquiring the linear relationship is as follows: The data processing unit 604 of the receive end 60 acquires a slope K by using any two sets of data in the foregoing nine sets of data, substitutes K, and a value of x and a value of y of either set of data in the two sets of data into a formula: y=K*x+Y, to obtain a value of Y, so as to acquire the linear relationship: y=K*x+Y, where the value of x and the value of y are variables, and the value of K and the value of Y are constants.

It should be noted that, there is also a linear relationship between a signal-to-noise-ratio-related value in the first case or the second case and a frequency shift value, and the data processing unit 604 of the receive end 60 may also acquire the linear relationship between a signal-to-noise-ratio-related value in the first case or the second case and a frequency shift value according to a similar algorithm.

It should be noted that, the foregoing method is merely an exemplary embodiment of acquiring a linear relationship of the present invention. Any embodiment, in which a linear relationship between a signal-to-noise-ratio-related value and a frequency shift value can be acquired, conceivable by a person skilled in the art according to the revelation of the foregoing embodiment can be applied in the present invention.

After the linear relationship is acquired, the center frequency of the OFDM signal may be adjusted in the following manners:

The receiver 603 of the receive end 60 acquires current signal-to-noise ratio values of subcarriers of an OFDM signal transmitted by the laser 503 of the transmit end 50.

The data processing unit 604 of the receive end 60 calculates a current signal-to-noise-ratio-related value according to the current signal-to-noise ratio values, where the current signal-to-noise-ratio-related value is an operation result obtained by performing a numerical operation on the current signal-to-noise ratio values, and different current signal-to-noise ratio values correspond to a different current signal-to-noise-ratio-related value.

The data processing unit 604 of the receive end 60 acquires, according to the current signal-to-noise-ratio-related value, a current frequency shift value corresponding to the current signal-to-noise-ratio-related value from the linear relationship between a frequency shift value of a center frequency of the OFDM signal and a signal-to-noise-ratio-related value.

The data processing unit 604 of the receive end 60 determines a frequency adjustment value according to the current frequency shift value, and transmits the frequency adjustment value to the data processing unit 501 of the transmit end 50.

The data processing unit 501 of the transmit end 50 controls, according to the frequency adjustment value, a control unit to adjust the center frequency of the OFDM signal transmitted by the laser 503.

When the signal-to-noise-ratio-related value equals a value shown by Formula (1), the receiver 603 of the receive end 60 acquires current signal-to-noise ratio values of low-frequency subcarriers and current signal-to-noise ratio values of high-frequency subcarriers from the subcarriers of the OFDM signal transmitted by the laser 503 of the transmit end 50. The data processing unit 604 of the receive end 60 calculates a current signal-to-noise ratio mean of the low-frequency subcarriers according to the signal-to-noise ratio values of the low-frequency subcarriers, calculates a current signal-to-noise ratio mean of the high-frequency subcarriers according to the signal-to-noise ratio values of the high-frequency subcarriers, and uses a result as the current signal-to-noise-ratio-related value, where the result is obtained by dividing the current signal-to-noise ratio mean of the low-frequency subcarriers by the current signal-to-noise ratio mean of the high-frequency subcarriers.

When the signal-to-noise-ratio-related value equals a value shown by Formula (2), the receiver 603 of the receive end 60 acquires current signal-to-noise ratio values of low-frequency subcarriers from the subcarriers of the OFDM signal transmitted by the laser 503 of the transmit end 50. The data processing unit 604 of the receive end 60 acquires the current signal-to-noise-ratio-related value according to the following formula:

$$SNR'_{mean\_w} = \frac{1}{N'} \times \sum_{k'=Lstart'}^{Lend'} 10^{\frac{SNR'_{k'}}{10}} ;$$

where $SNR'_{mean\_w}$ is the current signal-to-noise-ratio-related value, N' is a quantity of the low-frequency subcarriers, Lstart' is a starting position of the low-frequency subcarrier, Lend' is an ending position of the low-frequency subcarrier, k' is a positive integer, and $SNR'_{k'}$ is a current signal-to-noise ratio value of each low-frequency subcarrier.

When the signal-to-noise-ratio-related value equals a value shown by Formula (3), the receiver 603 of the receive end 60 acquires current signal-to-noise ratio values of low-frequency subcarriers from the subcarriers of the OFDM signal transmitted by the laser 503 of the transmit end 50. The data processing unit 604 of the receive end 60 calculates a current signal-to-noise ratio mean of the low-frequency subcarriers according to the current signal-to-noise ratio values of the low-frequency subcarriers, and uses the current signal-to-noise ratio mean of the low-frequency subcarriers as the current signal-to-noise-ratio-related value.

Specifically, the data processing unit 604 of the receive end 60 may use the current signal-to-noise-ratio-related value as a value of y, and substitute the value of y into the formula y=K*x+Y, to obtain the current frequency shift value x.

Optionally, the transmit end 50 further includes the data processing unit 501 and the control unit 502, the data processing unit 501, the control unit 502, and the laser 503 of the transmit end 50 are connected in sequence, and the data processing unit 501 of the transmit end 50 is in a data connection with the data processing unit 604 of the receive end 60.

When the data processing unit 604 of the receive end 60 determines that an absolute value of the current frequency shift value is less than a first preset threshold and greater than a second preset threshold, the data processing unit 604 of the receive end 60 uses the current frequency shift value as a frequency adjustment value and transmits the frequency adjustment value to the data processing unit 501 of the transmit end 50, where the first preset threshold is greater than the second preset threshold. The data processing unit 501 of the transmit end 50 adds a current center frequency value of the OFDM signal to the current frequency adjustment value, to obtain a fixed value. The control unit 502 of the transmit end 50 controls the laser 503 to adjust the current center frequency value of the OFDM signal to the fixed value.

When the data processing unit 604 of the receive end 60 determines that an absolute value of the current frequency shift value is greater than or equal to the first preset threshold, and the current frequency shift value is positive, the data processing unit 604 of the receive end 60 uses an additive inverse of the first preset threshold as the current frequency shift value, and when the current frequency shift value is negative, uses the first preset threshold as the current frequency shift value; and transmits the current frequency shift value to the data processing unit 501 of the transmit end 50. The data processing unit 501 of the transmit end 50 adds the current center frequency value of the OFDM signal to the current frequency shift value, to obtain a fixed value. The control unit 502 of the transmit end 50 controls the laser 503 to adjust the current center frequency value of the OFDM signal to the fixed value.

When determining that the current frequency shift value is less than or equal to the second preset threshold, the data processing unit 604 of the receive end 60 continually transmits different frequency adjustment values to the data processing unit 501 of the transmit end 50, where the frequency adjustment values are set to values between the second preset threshold and an additive inverse of the second preset threshold, and absolute values of the frequency adjustment values successively increase according to a first preset step length. The control unit 502 of the transmit end 50 adjusts upwards or downwards, according to the frequency adjustment value, the center frequency of the OFDM signal transmitted by the laser 503, till a bit error rate of the OFDM signal received from the transmit end 50 by the receiver 603 of the receive end 60 is the lowest.

Further, referring to FIG. 11, FIG. 11 is a schematic structural diagram of a system of a third embodiment of an orthogonal frequency division multiplexing OFDM system of the present invention. As shown in FIG. 11, in the third embodiment of the OFDM system, a beam combiner 504 and a beam splitter 602 are further disposed on a basis of the second embodiment. Specifically, a transmit end 50 further includes the beam combiner 504, a receive end 60 further includes the beam splitter 602, and the beam combiner 504 and the beam splitter 602 may serve as filters. An OFDM signal transmitted by a laser 503 passes through the beam combiner 504 and the beam splitter 602, and the filters affect a center frequency of the OFDM signal to make the center frequency shift to a certain degree. By using the technical solutions disclosed by the foregoing embodiments, in the embodiment of the present invention, a shift of a center frequency of the laser 503 can be identified, and the frequency of the laser 503 can be adjusted, so that the center frequency of the laser 503 is fixed, thereby ensuring performance stability of the OFDM system.

Therefore, in the embodiment of the present invention, a current signal-to-noise-ratio-related value is acquired, and a linear relationship is searched for a corresponding current frequency shift value according to the current signal-to-noise-ratio-related value; in this way, a shift of a center frequency of an OFDM signal transmitted by a laser can be identified, and a center frequency of the laser can then be correspondingly adjusted, so that the center frequency of the OFDM signal is fixed.

Moreover, in the embodiment of the present invention, frequency shifts that occur in a laser, a beam combiner of the transmit end, and a beam splitter of the receive end in an OFDM system can be detected, thereby implementing adaptive wavelength adjustment and ensuring performance stability of the OFDM system.

Furthermore, shifts of a laser wavelength, the beam combiner, and the beam splitter all have a linear relationship with a ratio of an SNR of a high-frequency subcarrier to an SNR of a low-frequency subcarrier, or an SNR of a low-frequency subcarrier, and it is not required to increase system costs for an adaptive wavelength adjustment algorithm based on such a relationship.

In addition, in the embodiment of the present invention, it is not required to add hardware, thereby reducing costs and improving product competitiveness.

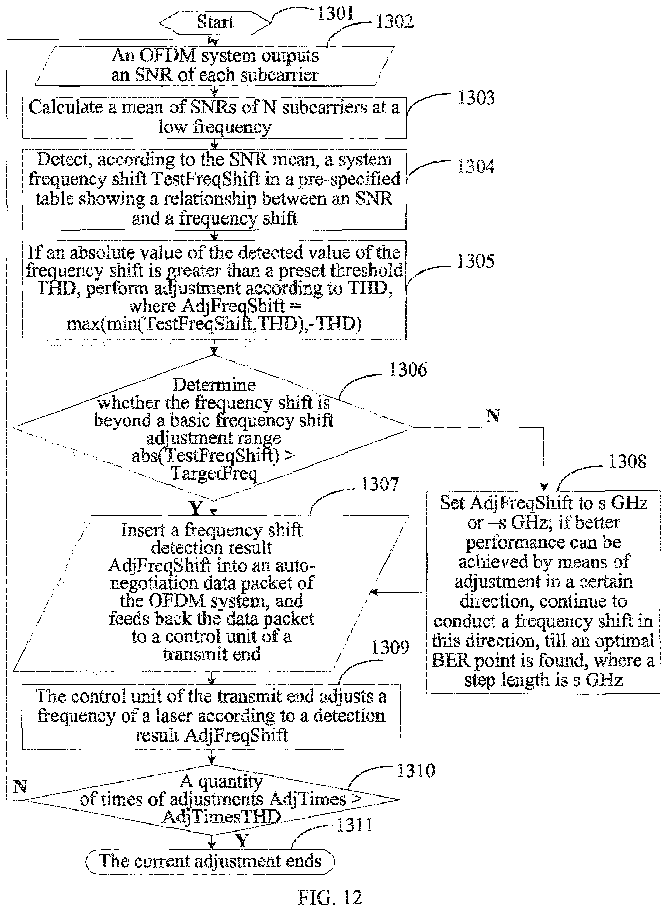

For further description, referring to FIG. 12, FIG. 12 is a flowchart of a second embodiment of a center frequency adjustment method of an orthogonal frequency division multiplexing OFDM system of the present invention. The method shown in FIG. 12 is performed on a basis of a system architecture shown in FIG. 6.

Specifically, as shown in FIG. 12, the method includes the following steps:

Step 1301: A process starts.

Step 1302: An OFDM system outputs an SNR of each subcarrier.

Step 1303: Calculate, according to the output in step 1302, a mean of SNRs of N subcarriers at a low frequency.

Step 1304: Detect, according to the SNR mean, a current frequency shift of the system in a pre-specified table showing a relationship between an SNR and a frequency shift.

Step 1305: If the detected frequency shift TestFreqShift is greater than a range THD of the table showing a relationship between an SNR and a frequency shift, a frequency shift value is set to THD; this step may be implemented by using the following formula:

$$AdjFreqShift = max(min(TestFreqShift, THD), -THD)$$

According to this formula, a minimum value is first selected from TestFreqShift and THD, and then a maximum value is selected from min(TestFreqShift, THD) and -THD, which has the following functions:

(1) When TestFreqShift > 0, if TestFreqShift > THD, AdjFreqShift = THD; and
(2) When TestFreqShift <0, if TestFreqShift < -THD, AdjFreqShift = THD.

Step 1306: Determine whether the frequency shift TestFreqShift is beyond a basic frequency shift adjustment range, and if the frequency shift falls within the basic frequency shift adjustment range, perform step 1307; or otherwise, perform step 1308. The determining may be implemented by using the following formula:

$$abs(TestFreqShift) > TargetFreq$$

The basic frequency shift adjustment range TargetFreq may be set by an operator. abs(TestFreqShift) is an absolute value of TestFreqShift.

Step 1308: By using a current working frequency F_SCAN of a laser 503 as a starting point, adjust a working frequency of the laser 503 left or right according to a step length Sopt GHz; if the system performance is improved after adjustment in a certain direction, continue to adjust the working frequency in this direction, till an optimal working frequency point F OPT of the laser 503 is found, where the performance is BER_OPT, a specific process is shown in FIG. 12, and Sopt may be set by an operator.

Step 1307: Transmit a frequency shift detection result to a transmit end by using an auto-negotiation data packet.

Step 1309: A control unit 502 of the transmit end adjusts a frequency of the laser 503 according to a detection result AdjFreqShift, so that the working frequency of the laser 503 falls within a required range, where the frequency of the laser 503 after adjustment is recorded as F_SCAN.

Step 1310: If a total quantity of iterations does not exceed AdjTimeTHD, go back to step 1302; or otherwise, the current adjustment ends, where AdjTimeTHD may be set by an operator and AdjTimeTHD is a positive integer.

Step 1311: The process ends.

Step 1302 is performed by a receiver 603 of a receive end 60, step 1303 to step 1307 are performed by a data processing unit 604 of the receive end 60, step 1308 is performed by the receive end 60 and the transmit end 50 in a coordination manner, and step 1309 and step 1310 are performed by the control unit 502 of the transmit end 50.

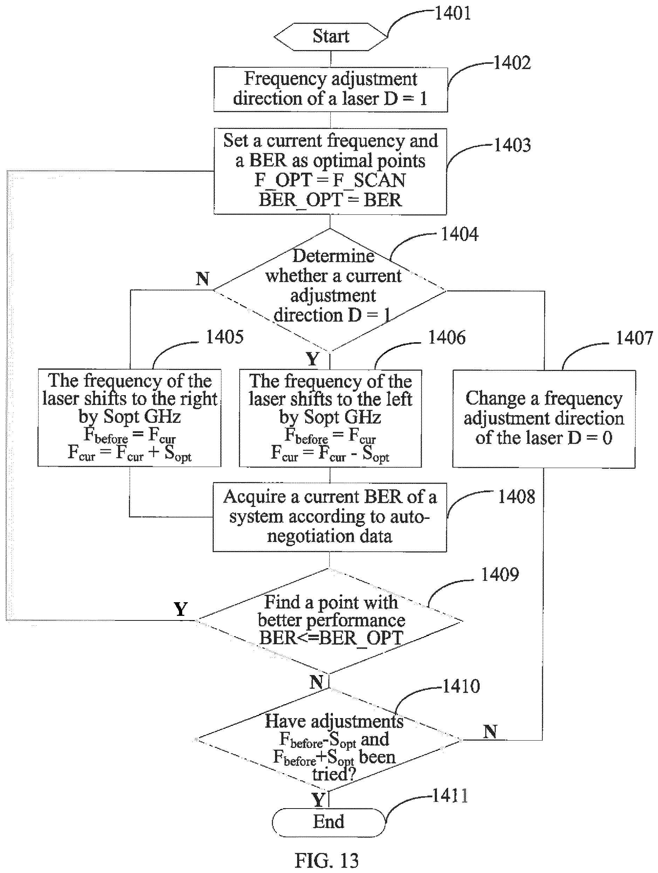

A specific process of step 1308 in FIG. 12 is shown in FIG. 13, where step 1308 is used to implement fine adjustment on the center frequency. For details, reference may be made to FIG. 13. Detailed description is provides as follows:

Step 1401: A process starts.

Step 1402: Set a frequency adjustment direction of the laser 503 to leftward adjustment D=1, where D=1 indicates leftward adjustment, D=0 indicates rightward adjustment; and perform step 1403.

Step 1403: Record a current working frequency of the laser 503 and a current bit error rate BER as optimal points, that is, an optimal frequency and optimal performance; and perform step 1404.

Step 1404: Determine a current adjustment direction, and if the current adjustment direction is leftward adjustment, perform step 1405; or otherwise, perform step 1406.

Step 1405: Enable a frequency of the laser 503 to shift to the right by Sopt GHz, and perform step 1408.

Step 1406: Enable a frequency of the laser 503 to shift to the left by Sopt GHz, and perform step 1408.

Step 1408: Obtain a current BER of the system by using auto-negotiation data.

Step 1409: Compare a BER of the system when the laser 503 works at the current frequency with a BER at the optimal point; if the current BER is less than or equal to the BER at the optimal point, go back to step 1403, update the optimal BER and continue to try to adjust the frequency of the laser 503; and if the current BER is greater than the BER at the optimal point, it indicates that it is not required to continually try to adjust the frequency in this direction, and perform step 1410.

Step 1410: Determine whether adjustment on both the left side and the right side of the frequency optimal point of the laser 503 have been tried; and if the adjustment has been tried in both directions, it indicates that the optimal point is found, where the performance at the optimal point is BER_OPT and the working frequency of the laser 503 at the optimal point is F_OPT, and perform step 1411; or otherwise, perform step 1407.

Step 1407: Set an adjustment direction of the laser 503 to the right, go back to step 1404, and continue to try to find a point with better performance.

Step 1411: The process ends.

Step 1402, and step 1404 to step 1410 are performed by the control unit 502 of the transmit end 50, and step 1403 is performed by the data processing unit 604 of the transmit end 60.

The foregoing embodiment is a specific application example of a center frequency adjustment method of an OFDM signal in an orthogonal frequency division multiplexing OFDM system. In the embodiment of the present invention, wavelength shifts that occur in a laser, a beam combiner of a transmit end, and a beam splitter of a receive end in an OFDM single sideband system can be detected, thereby implementing adaptive wavelength adjustment and ensuring performance stability of the OFDM system. Moreover, shifts of a laser wavelength, the beam combiner, and the beam splitter all have a linear relationship with a ratio of an SNR of a high-frequency subcarrier to an SNR of a low-frequency subcarrier, or an SNR of a low-frequency subcarrier, and it is not required to increase system costs for an adaptive wavelength adjustment algorithm based on such a relationship. In addition, in the embodiment of the present invention, it is only required to make an improvement on software, and hardware does not need to be added, thereby reducing costs and improving product competitiveness.

Therefore, in the foregoing disclosed content, the present invention discloses an OFDM system and a center frequency adjustment method thereof. A receive end first acquires a linear relationship between a frequency shift value and a signal-to-noise-ratio-related value in the OFDM system, acquires a current signal-to-noise-ratio-related value, and searches, according to the current signal-to-noise-ratio-related value, the linear relationship for a corresponding current frequency shift value. The current frequency shift value can be acquired according to the current signal-to-noise-ratio-related value and the linear relationship, and the current signal-to-noise-ratio-related value can be obtained by performing calculation on current signal-to-noise ratio values; therefore, in the present invention, a center frequency shift value of an OFDM signal can be acquired, and a center frequency of the OFDM signal transmitted by a transmit end can be adjusted according to the center frequency shift value, to fix the center frequency, thereby ensuring stability of system performance.

The foregoing descriptions are merely embodiments of the present invention, and are not intended to limit the scope of the present invention. An equivalent structural or equivalent process alternation made by using the content of the specification and drawings of the present invention, or an application of the content of the specification and drawings directly or indirectly to another related technical field, shall fall within the protection scope of the present invention.

## Claims

1. A center frequency adjustment method of an orthogonal frequency division multiplexing OFDM system, wherein the OFDM system comprises a transmit end (50) and a receive end (60), and the method comprises:

   acquiring, by the receive end (60), current signal-to-noise ratio values of subcarriers of an OFDM signal transmitted by the transmit end (50);
   calculating, by the receive end (60), a current signal-to-noise-ratio-related value according to the current signal-to-noise ratio values, wherein the current signal-to-noise-ratio-related value is an operation result obtained by performing a numerical operation on the current signal-to-noise ratio values, and different current signal-to-noise ratio values correspond to a different current signal-to-noise-ratio-related value;
   acquiring, by the receive end (60) according to the current signal-to-noise-ratio-related value, a current frequency shift value corresponding to the current signal-to-noise-ratio-related value from a linear relationship between a frequency shift value of a center frequency of the OFDM signal and a signal-to-noise-ratio-related value;

determining, by the receive end (60), a frequency adjustment value according to the current frequency shift value, and transmitting the frequency adjustment value to the transmit end (50); and

adjusting, by the transmit end (50) according to the frequency adjustment value, the center frequency of the OFDM signal transmitted by the transmit end (50).

2. The method according to claim 1, wherein

the acquiring, by the receive end (60), current signal-to-noise ratio values of subcarriers of the OFDM signal transmitted by the transmit end (50) specifically comprises:

acquiring, by the receive end (60) from the transmit end (50), current signal-to-noise ratio values of low-frequency subcarriers in the subcarriers of the OFDM signal and current signal-to-noise ratio values of high-frequency subcarriers in the subcarriers of the OFDM signal; and

the calculating, by the receive end (60), a current signal-to-noise-ratio-related value according to the current signal-to-noise ratio values specifically comprises:

calculating, by the receive end (60), a current signal-to-noise ratio mean of the low-frequency subcarriers according to the signal-to-noise ratio values of the low-frequency subcarriers, calculating a current signal-to-noise ratio mean of the high-frequency subcarriers according to the signal-to-noise ratio values of the high-frequency subcarriers, and using a result as the current signal-to-noise-ratio-related value, wherein the result is obtained by dividing the current signal-to-noise ratio mean of the low-frequency subcarriers by the current signal-to-noise ratio mean of the high-frequency subcarriers.

3. The method according to claim 1, wherein

the acquiring, by the receive end (60), current signal-to-noise ratio values of subcarriers of the OFDM signal transmitted by the transmit end (50) specifically comprises:

acquiring, by the receive end (60) from the transmit end (50), current signal-to-noise ratio values of low-frequency subcarriers in the subcarriers of the OFDM signal; and

the calculating, by the receive end (60), a current signal-to-noise-ratio-related value according to the current signal-to-noise ratio values specifically comprises:

acquiring, by the receive end (60), the current signal-to-noise-ratio-related value according to the following formula:

$$SNR'_{mean\_w} = \frac{1}{N'} \times \sum_{k'=Lstart'}^{Lend'} 10^{\frac{SNR'_{k'}}{10}} \; ;$$

wherein $SNR'_{mean\_w}$ is the current signal-to-noise-ratio-related value, N' is a quantity of the low-frequency subcarriers, Lstart' is a starting position of the low-frequency subcarrier, Lend' is an ending position of the low-frequency subcarrier, k' is a positive integer, and SNR'k' is a current signal-to-noise ratio value of each low-frequency subcarrier.

4. The method according to claim 1, wherein

the acquiring, by the receive end (60), current signal-to-noise ratio values of subcarriers of the OFDM signal transmitted by the transmit end (50) specifically comprises:

acquiring, by the receive end (60) from the transmit end (50), current signal-to-noise ratio values of low-frequency subcarriers in the subcarriers of the OFDM signal; and

the calculating, by the receive end (60), a current signal-to-noise-ratio-related value according to the current signal-to-noise ratio values specifically comprises:

calculating, by the receive end (60), a current signal-to-noise ratio mean of the low-frequency subcarriers according to the current signal-to-noise ratio values of the low-frequency subcarriers, and using the current signal-to-noise ratio mean of the low-frequency subcarriers as the current signal-to-noise-ratio-related value.

5. The method according to any one of claims 1 to 4, wherein

the determining, by the receive end (60), a frequency adjustment value according to the current frequency shift value, and transmitting the frequency adjustment value to the transmit end (50) comprises:

when the receive end (60) determines that an absolute value of the current frequency shift value is less than a first preset threshold and greater than a second preset threshold, using, by the receive end (60), an additive inverse of the current frequency shift value as the frequency adjustment value, and transmitting the frequency adjustment value to the transmit end (50), wherein the first preset threshold is greater than the second preset threshold; and

the adjusting, by the transmit end (50) according to the frequency adjustment value, the center frequency of the OFDM signal transmitted by the transmit end (50) comprises:

adding, by the transmit end (50), a current center frequency value of the OFDM signal to the frequency adjustment value, to obtain a fixed value, and adjusting the current center frequency value of the OFDM signal to the fixed value.

6. The method according to any one of claims 1 to 4, wherein
the determining, by the receive end (60), a frequency adjustment value according to the current frequency shift value, and transmitting the frequency adjustment value to the transmit end (50) comprises:

when the receive end (60) determines that an absolute value of the current frequency shift value is greater than or equal to a first preset threshold, and the current frequency shift value is positive, using, by the receive end (60), an additive inverse of the first preset threshold as the frequency adjustment value, and when the current frequency shift value is negative, using the first preset threshold as the frequency adjustment value, and transmitting the frequency adjustment value to the transmit end (50); and

the adjusting, by the transmit end (50) according to the frequency adjustment value, the center frequency of the OFDM signal transmitted by the transmit end (50) comprises:

adding, by the transmit end (50), a current center frequency value of the OFDM signal to the frequency adjustment value, to obtain a fixed value, and adjusting the current center frequency value of the OFDM signal to the fixed value.

7. The method according to any one of claims 1 to 4, wherein
the determining, by the receive end (60), a frequency adjustment value according to the current frequency shift value, and transmitting the frequency adjustment value to the transmit end (50) comprises:

when the receive end (60) determines that an absolute value of the current frequency shift value is less than or equal to a second preset threshold, continually transmitting different frequency adjustment values to the transmit end (50), wherein the frequency adjustment values are set to values between the second preset threshold and an additive inverse of the second preset threshold; and

the adjusting, by the transmit end (50) according to the frequency adjustment value, the center frequency of the OFDM signal transmitted by the transmit end (50) comprises:

adjusting the center frequency of the OFDM signal upwards or downwards according to the frequency adjustment value, till a bit error rate of the OFDM signal acquired by the receive end (60) from the transmit end (50) is the lowest.

8. The method according to any one of claims 1 to 7, wherein the receive end acquires the linear relationship in the following manners:

adjusting, by the transmit end (50), the center frequency of the OFDM signal upwards or downwards by using different frequency shift values, wherein the frequency shift values are set to values between the first preset threshold and an additive inverse of the first preset threshold, and absolute values of the frequency shift values successively increase according to a second preset step length;

separately acquiring, by the receive end (60) from the transmit end (50), signal-to-noise ratio values of multiple subcarrier groups corresponding to the OFDM signal when the different frequency shift values are set;

calculating, by the receive end (60), a corresponding signal-to-noise-ratio-related value according to signal-to-noise ratio values of each subcarrier group, to obtain multiple noise-ratio-related values corresponding to the different frequency shift values, wherein the signal-to-noise-ratio-related value is an operation result obtained by performing a numerical operation on the signal-to-noise ratio values, and different signal-to-noise ratio values correspond to different signal-to-noise-ratio-related values; and

acquiring, by the receive end (60), the linear relationship between a frequency shift value and a signal-to-noise-ratio-related value in the OFDM system according to a correspondence between a frequency shift value and a signal-to-noise-ratio-related value.

9. An orthogonal frequency division multiplexing OFDM system, wherein the OFDM system comprises a transmit end (50) and a receive end (60), the transmit end (50) comprises a laser (503), and the receive end (60) comprises a receiver (603) and a data processing unit (604), wherein
the receiver (603) of the receive end (60) is configured to acquire current signal-to-noise ratio values of subcarriers of an OFDM signal transmitted by the laser of the transmit end (50);
the data processing unit (604) of the receive end (60) is configured to calculate a current signal-to-noise-ratio-related value according to the current signal-to-noise ratio values, wherein the current signal-to-noise-ratio-related value is an operation result obtained by performing a numerical operation on the current signal-to-noise ratio values, and different current signal-to-noise ratio values correspond to a different current signal-to-noise-ratio-related value;
the data processing unit (604) of the receive end (60) is configured to acquire, according to the current signal-to-noise-ratio-related value, a current frequency shift value corresponding to the current signal-to-noise-ratio-related value from a linear relationship between a frequency shift value of a center frequency of the OFDM signal and a signal-to-noise-ratio-related value;
the data processing unit (604) of the receive end (60) is configured to determine a frequency adjustment value according to the current frequency shift value, and configured to transmit the frequency adjustment value to a data processing unit (501) of the transmit end (50); and the data processing unit (501) of the transmit end (50) is configured to control, according to the frequency adjustment value, a control unit (502) to adjust the center frequency of the OFDM signal transmitted by the laser (503).

10. The system according to claim 9, wherein
the receiver (603) of the receive end (60) acquires current signal-to-noise ratio values of low-frequency subcarriers in the subcarriers of the OFDM signal and current signal-to-noise ratio values of high-frequency subcarriers in the subcarriers of the OFDM signal, where the OFDM signal is transmitted by the laser (503) of the transmit end (50); and
the data processing unit (604) of the receive end (60) calculates a current signal-to-noise ratio mean of the low-frequency subcarriers according to the signal-to-noise ratio values of the low-frequency subcarriers, calculates a current signal-to-noise ratio mean of the high-frequency subcarriers according to the signal-to-noise ratio values of the high-frequency subcarriers, and uses a result as the current signal-to-noise-ratio-related value, where the result is obtained by dividing the current signal-to-noise ratio mean of the low-frequency subcarriers by the current signal-to-noise ratio mean of the high-frequency subcarriers.

11. The system according to claim 9, wherein
the receiver (603) of the receive end (60) acquires current signal-to-noise ratio values of low-frequency subcarriers in the subcarriers of the OFDM signal, where the OFDM signal is transmitted by the laser (503) of the transmit end (50); and
the data processing unit (604) of the receive end (60) acquires the current signal-to-noise-ratio-related value according to the following formula:

$$ SNR'_{mean\_w} = \frac{1}{N'} \times \sum_{k'=Lstart'}^{Lend'} 10^{\frac{SNR'_{k'}}{10}} ; $$

wherein $SNR'_{mean\_w}$ is the current signal-to-noise-ratio-related value, N' is a quantity of the low-frequency subcarriers, Lstart' is a starting position of the low-frequency subcarrier, Lend' is an ending position of the low-frequency subcarrier, k' is a positive integer, and $SNR'_{k'}$ is a current signal-to-noise ratio value of each low-frequency subcarrier.

12. The system according to claim 9, wherein
the receiver (603) of the receive end (60) acquires current signal-to-noise ratio values of low-frequency subcarriers in the subcarriers of the OFDM signal, where the OFDM signal transmitted by the laser (503) of the transmit end (50); and
the data processing unit (604) of the receive end (60) calculates a current signal-to-noise ratio mean of the low-frequency subcarriers according to the current signal-to-noise ratio values of the low-frequency subcarriers, and uses the current signal-to-noise ratio mean of the low-frequency subcarriers as the current signal-to-noise-ratio-related value.

**13.** The system according to any one of claims 10 to 12, wherein the transmit end (50) further comprises the data processing unit (501) and the control unit (502), and the data processing unit (501), the control unit (502), and the laser (503) of the transmit end (50) are connected in sequence;

when the data processing unit (604) of the receive end (60) determines that an absolute value of the current frequency shift value is less than a first preset threshold and greater than a second preset threshold, the data processing unit (604) of the receive end (60) uses an additive inverse of the current frequency shift value as the frequency adjustment value, and transmits the frequency adjustment value to the data processing unit (501) of the transmit end (50), wherein the first preset threshold is greater than the second preset threshold;

the data processing unit (501) of the transmit end (50) adds a current center frequency value of the OFDM signal to the current frequency adjustment value, to obtain a fixed value; and

the control unit (502) of the transmit end (50) controls the laser (503) to adjust the current center frequency value of the OFDM signal to the fixed value.

**14.** The system according to any one of claims 10 to 12, wherein the transmit end (50) further comprises the data processing unit (501) and the control unit (502), and the data processing unit (501), the control unit (502), and the laser (503) of the transmit end (50) are connected in sequence;

when determining that an absolute value of the current frequency shift value is greater than or equal to a first preset threshold, and the current frequency shift value is positive, the data processing unit (604) of the receive end (60) uses an additive inverse of the first preset threshold as the current frequency shift value, and when the current frequency shift value is negative, uses the first preset threshold as the current frequency shift value; and transmits the current frequency shift value to the data processing unit (501) of the transmit end (50);

the data processing unit (501) of the transmit end (50) adds a current center frequency value of the OFDM signal to the current frequency shift value, to obtain a fixed value; and

the control unit (502) of the transmit end (50) controls the laser (503) to adjust the current center frequency value of the OFDM signal to the fixed value.

**15.** The system according to any one of claims 10 to 12, wherein the transmit end (50) further comprises the data processing unit (501) and the control unit, and the data processing unit (502), the control unit (503), and the laser of the transmit end are connected in sequence;

when determining that an absolute value of the current frequency shift value is less than or equal to a second preset threshold, the data processing unit (604) of the receive end (60) continually transmits different frequency adjustment values to the data processing unit (501) of the transmit end (50), wherein the frequency adjustment values are set to values between the second preset threshold and an additive inverse of the second preset threshold, and absolute values of the frequency adjustment values successively increase according to a first preset step length; and

the control unit (502) of the transmit end (50) adjusts upwards or downwards, according to the frequency adjustment value, the center frequency of the OFDM signal transmitted by the laser (503), till a bit error rate of the OFDM signal received by the receiver (603) of the receive end (60) from the transmit end (50) is the lowest.

**Patentansprüche**

**1.** Mittenfrequenzeinstellverfahren eines Systems für ein orthogonales Frequenzmultiplexverfahren "Orthogonal Frequency Division Multiplexing" (OFDM), wobei das OFDM-System eine Sendeseite (50) und eine Empfangsseite (60) umfasst und das Verfahren Folgendes umfasst:

Erfassen, durch die Empfangsseite (60), von aktuellen Signal-Rausch-Verhältnis-Werten von Unterträgern eines durch die Sendeseite (50) übertragenen OFDM-Signals;

Berechnen, durch die Empfangsseite (60), eines aktuellen Signal-Rausch-Verhältnis-bezogenen Werts gemäß den aktuellen Signal-Rausch-Verhältnis-Werten, wobei der aktuelle Signal-Rausch-Verhältnis-bezogene Wert ein Operationsergebnis ist, das durch ein Durchführen einer numerischen Operation bei den aktuellen Signal-Rausch-Verhältnis-Werten erhalten wird, und verschiedene aktuelle Signal-Rausch-Verhältnis-Werte einem verschiedenen aktuellen Signal-Rausch-Verhältnis-bezogenen Wert entsprechen;

Erfassen, durch die Empfangsseite (60) gemäß dem aktuellen Signal-Rausch-Verhältnis-bezogenen Wert, eines aktuellen Frequenzverschiebungswerts entsprechend dem aktuellen Signal-Rausch-Verhältnis-bezogenen Wert aus einer linearen Beziehung zwischen einem Frequenzverschiebungswert einer Mittenfrequenz des OFDM-Signals und einem Signal-Rausch-Verhältnis-bezogenen Wert;

Bestimmen, durch die Empfangsseite (60), eines Frequenzeinstellwerts gemäß dem aktuellen Frequenzverschiebungswert und Übertragen des Frequenzeinstellwerts zu der Sendeseite (50); und

Einstellen, durch die Sendeseite (50) gemäß dem Frequenzeinstellwert, der Mittenfrequenz des durch die Sendeseite (50) übertragenen OFDM-Signals.

2. Verfahren nach Anspruch 1, wobei
das Erfassen, durch die Empfangsseite (60), von aktuellen Signal-Rausch-Verhältnis-Werten von Unterträgern eines durch die Sendeseite (50) übertragenen OFDM-Signals insbesondere Folgendes umfasst:

Erfassen, durch die Empfangsseite (60) von der Sendeseite (50), von aktuellen Signal-Rausch-Verhältnis-Werten von Niederfrequenzunterträgern in den Unterträgern des OFDM-Signals und aktuellen Signal-Rausch-Verhältnis-Werten von Hochfrequenzunterträgern in den Unterträgern des OFDM-Signals; und
das Berechnen, durch die Empfangsseite (60), eines aktuellen Signal-Rausch-Verhältnis-bezogenen Werts gemäß den aktuellen Signal-Rausch-Verhältnis-Werten insbesondere Folgendes umfasst:
Berechnen, durch die Empfangsseite (60), eines aktuellen Signal-Rausch-Verhältnis-Mittelwerts des Niederfrequenzunterträgers gemäß den Signal-Rausch-Verhältnis-Werten der Niederfrequenzunterträger, Berechnen eines aktuellen Signal-Rausch-Verhältnis-Mittelwerts der Hochfrequenzunterträger gemäß den Signal-Rausch-Verhältnis-Werten der Hochfrequenzunterträger und Verwenden eines Ergebnisses als den aktuellen Signal-Rausch-Verhältnis-bezogenen Wert, wobei das Ergebnis durch Teilen des aktuellen Signal-Rausch-Verhältnis-Mittelwerts der Niederfrequenzunterträger durch den aktuellen Signal-Rausch-Verhältnis-Mittelwert der Hochfrequenzunterträger erhalten wird.

3. Verfahren nach Anspruch 1, wobei
das Erfassen, durch die Empfangsseite (60), von aktuellen Signal-Rausch-Verhältnis-Werten von Unterträgern eines durch die Sendeseite (50) übertragenen OFDM-Signals insbesondere Folgendes umfasst:

Erfassen, durch die Empfangsseite (60) von der Sendeseite (50), von aktuellen Signal-Rausch-Verhältnis-Werten von Niederfrequenzunterträgern in den Unterträgern des OFDM-Signals; und
das Berechnen, durch die Empfangsseite (60), eines aktuellen Signal-Rausch-Verhältnis-bezogenen Werts gemäß den aktuellen Signal-Rausch-Verhältnis-Werten insbesondere Folgendes umfasst:
Erfassen, durch die Empfangsseite (60), des aktuellen Signal-Rausch-Verhältnis-bezogenen Werts gemäß der folgenden Formel:

$$SNR'mean_{\_w} = \frac{1}{N'} \times \sum_{k'=Lstart'}^{Lend'} 10^{\frac{SNR'_{k'}}{10}} \ ;$$

wobei $SNR'_{mean\_w}$ der aktuelle Signal-Rausch-Verhältnis-bezogene Wert ist, N' eine Menge der Niederfrequenzunterträger ist, Lstart' eine Ausgangsposition der Niederfrequenzunterträger ist, Lend' eine Endposition des Niederfrequenzunterträgers ist, k' eine positive Ganzzahl ist und $SNR'_{k'}$ ein aktueller Signal-Rausch-Verhältnis-Wert von jedem Niederfrequenzunterträger ist.

4. Verfahren nach Anspruch 1, wobei
das Erfassen, durch die Empfangsseite (60), von aktuellen Signal-Rausch-Verhältnis-Werten von Unterträgern eines durch die Sendeseite (50) übertragenen OFDM-Signals insbesondere Folgendes umfasst:

Erfassen, durch die Empfangsseite (60) von der Sendeseite (50), von aktuellen Signal-Rausch-Verhältnis-Werten von Niederfrequenzunterträgern in den Unterträgern des OFDM-Signals; und
das Berechnen, durch die Empfangsseite (60), eines aktuellen Signal-Rausch-Verhältnis-bezogenen Werts gemäß den aktuellen Signal-Rausch-Verhältnis-Werten insbesondere Folgendes umfasst:
Berechnen, durch die Empfangsseite (60), eines aktuellen Signal-Rausch-Verhältnis-Mittelwerts der Niederfrequenzunterträger gemäß den aktuellen Signal-Rausch-Verhältnis-Werten der Niederfrequenzunterträger und Verwenden des aktuellen Signal-Rausch-Verhältnis-Mittelwerts der Niederfrequenzunterträger als den aktuellen Signal-Rausch-Verhältnis-bezogenen Wert.

5. Verfahren nach Anspruch 1 bis 4, wobei
das Bestimmen, durch die Empfangsseite (60), eines Frequenzeinstellwerts gemäß dem aktuellen Frequenzverschiebungswert und Übertragen des Frequenzeinstellwerts zu der Sendeseite (50) Folgendes umfasst:

wenn die Empfangsseite (60) bestimmt, dass ein absoluter Wert des aktuellen Frequenzverschiebungswerts kleiner als ein erster vorgegebener Schwellwert und größer als ein zweiter vorgegebener Schwellwert ist, Verwenden, durch die Empfangsseite (60), einer Gegenzahl des aktuellen Frequenzverschiebungswerts als den Frequenzeinstellwert und Übertragen des Frequenzeinstellwerts zu der Sendeseite (50), wobei der erste vorgegebene Schwellwert größer als der zweite vorgegebene Schwellwert ist; und

das Einstellen, durch die Sendeseite (50) gemäß dem Frequenzeinstellwert, der Mittenfrequenz des durch die Sendeseite (50) übertragenen OFDM-Signals Folgendes umfasst:

Addieren, durch die Sendeseite (50), eines aktuellen Mittenfrequenzwerts des OFDM-Signals zu dem Frequenzeinstellwert, um einen festen Wert zu erhalten, und Einstellen des aktuellen Mittenfrequenzwerts des OFDM-Signals auf den festen Wert.

6. Verfahren nach Anspruch 1 bis 4, wobei

das Bestimmen, durch die Empfangsseite (60), eines Frequenzeinstellwerts gemäß dem aktuellen Frequenzverschiebungswert und Übertragen des Frequenzeinstellwerts zu der Sendeseite (50) Folgendes umfasst:

wenn die Empfangsseite (60) bestimmt, dass ein absoluter Wert des aktuellen Frequenzverschiebungswerts größer oder gleich einem ersten vorgegebenen Schwellwert ist und der aktuelle Frequenzverschiebungswert positiv ist, Verwenden, durch die Empfangsseite (60), einer Gegenzahl des ersten vorgegebenen Schwellwerts als den Frequenzeinstellwert, und wenn der aktuelle Frequenzverschiebungswert negativ ist, Verwenden des ersten vorgegebenen Schwellwerts als den Frequenzeinstellwert und Übertragen des Frequenzeinstellwerts zu der Sendeseite (50); und

das Einstellen, durch die Sendeseite (50) gemäß dem Frequenzeinstellwert, der Mittenfrequenz des durch die Sendeseite (50) übertragenen OFDM-Signals Folgendes umfasst:

Addieren, durch die Sendeseite (50), eines aktuellen Mittenfrequenzwerts des OFDM-Signals zu dem Frequenzeinstellwert, um einen festen Wert zu erhalten, und Einstellen des aktuellen Mittenfrequenzwerts des OFDM-Signals auf den festen Wert.

7. Verfahren nach Anspruch 1 bis 4, wobei

das Bestimmen, durch die Empfangsseite (60), eines Frequenzeinstellwerts gemäß dem aktuellen Frequenzverschiebungswert und Übertragen des Frequenzeinstellwerts zu der Sendeseite (50) Folgendes umfasst:

wenn die Empfangsseite (60) bestimmt, dass ein absoluter Wert des aktuellen Frequenzverschiebungswerts kleiner oder gleich einem zweiten vorgegebenen Schwellwert ist, fortlaufendes Übertragen von verschiedenen Frequenzeinstellwerten zu der Sendeseite (50), wobei die Frequenzeinstellwerte auf Werte zwischen dem zweiten vorgegebenen Schwellwert und einer Gegenzahl des zweiten vorgegebenen Schwellwerts festgelegt sind; und

das Einstellen, durch die Sendeseite (50) gemäß dem Frequenzeinstellwert, der Mittenfrequenz des durch die Sendeseite (50) übertragenen OFDM-Signals Folgendes umfasst:

Einstellen der Mittenfrequenz des OFDM-Signals nach oben oder nach unten gemäß dem Frequenzeinstellwert, bis eine Bitfehlerrate des durch die Empfangsseite (60) von der Sendeseite (50) erfassten OFDM-Signals am niedrigsten ist.

8. Verfahren nach einem der Ansprüche 1 bis 7, wobei die Empfangsseite die lineare Beziehung auf die folgenden Weisen erfasst:

Einstellen, durch die Sendeseite (50), der Mittenfrequenz des OFDM-Signals nach oben oder nach unten durch Verwenden von verschiedenen Frequenzverschiebungswerten, wobei die Frequenzverschiebungswerte auf Werte zwischen dem ersten vorgegebenen Schwellwert und einer Gegenzahl des ersten vorgegebenen Schwellwerts festgelegt sind und absolute Werte der Frequenzverschiebungswerte gemäß einer zweiten vorgegebenen Schrittlänge sukzessive zunehmen;

getrenntes Erfassen, durch die Empfangsseite (60) von der Sendeseite (50), von Signal-Rausch-Verhältnis-Werten von mehreren Unterträgergruppen entsprechend dem OFDM-Signal, wenn die verschiedenen Frequenzverschiebungswerte festgelegt sind;

Berechnen, durch die Empfangsseite (60), eines entsprechenden Signal-Rausch-Verhältnis-bezogenen Werts gemäß Signal-Rausch-Verhältnis-Werten von jeder Unterträgergruppe, um mehrere Rausch-Verhältnis-bezogene Werte entsprechend den verschiedenen Frequenzverschiebungswerten zu erhalten, wobei der Signal-Rausch-Verhältnis-bezogene Wert ein Operationsergebnis ist, das durch ein Durchführen einer numerischen Operation bei den Signal-Rausch-Verhältnis-Werten erhalten wird, und verschiedene Signal-Rausch-Verhältnis-Werte verschiedenen Signal-Rausch-Verhältnis-bezogenen Werten entsprechen; und

Erfassen, durch die Empfangsseite (60), der linearen Beziehung zwischen einem Frequenzverschiebungswert und einem Signal-Rausch-Verhältnis-bezogenen Wert in dem OFDM-System gemäß einer Entsprechung zwischen einem Frequenzverschiebungswert und einem Signal-Rausch-Verhältnis-bezogenen Wert.

9. System für ein orthogonales Frequenzmultiplexverfahren "Orthogonal Frequency Division Multiplexing" (OFDM), wobei das OFDM-System eine Sendeseite (50) und eine Empfangsseite (60) umfasst, die Sendeseite (50) einen Laser (503) umfasst und die Empfangsseite (60) einen Empfänger (603) und eine Datenverarbeitungseinheit (604) umfasst, wobei
der Empfänger (603) der Empfangsseite (60) dazu ausgelegt ist, aktuelle Signal-Rausch-Verhältnis-Werte von Unterträgern eines durch den Laser der Sendeseite (50) übertragenen OFDM-Signals zu erfassen;
die Datenverarbeitungseinheit (604) der Empfangsseite (60) dazu ausgelegt ist, einen aktuellen Signal-Rausch-Verhältnis-bezogenen Wert gemäß den aktuellen Signal-Rausch-Verhältnis-Werten zu berechnen, wobei der aktuelle Signal-Rausch-Verhältnis-bezogene Wert ein Operationsergebnis ist, das durch ein Durchführen einer numerischen Operation bei den aktuellen Signal-Rausch-Verhältnis-Werten erhalten wird, und verschiedene aktuelle Signal-Rausch-Verhältnis-Werte einem verschiedenen aktuellen Signal-Rausch-Verhältnis-bezogenen Wert entsprechen;
die Datenverarbeitungseinheit (604) der Empfangsseite (60) dazu ausgelegt ist, gemäß dem aktuellen Signal-Rausch-Verhältnis-bezogenen Wert, einen aktuellen Frequenzverschiebungswert entsprechend dem aktuellen Signal-Rausch-Verhältnis-bezogenen Wert aus einer linearen Beziehung zwischen einem Frequenzverschiebungswert einer Mittenfrequenz des OFDM-Signals und einem Signal-Rausch-Verhältnis-bezogenen Wert zu erfassen;
die Datenverarbeitungseinheit (604) der Empfangsseite (60) dazu ausgelegt ist, einen Frequenzeinstellwert gemäß dem aktuellen Frequenzverschiebungswert zu bestimmen, und dazu ausgelegt ist, den Frequenzeinstellwert zu einer Datenverarbeitungseinheit (501) der Sendeseite (50) zu übertragen; und
die Datenverarbeitungseinheit (501) der Sendeseite (50) dazu ausgelegt ist, gemäß dem Frequenzeinstellwert, eine Steuereinheit (502) zu steuern, um die Mittenfrequenz des durch den Laser (503) übertragenen OFDM-Signals einzustellen.

10. System nach Anspruch 9, wobei
der Empfänger (603) der Empfangsseite (60) aktuelle Signal-Rausch-Verhältnis-Werte von Niederfrequenzunterträgern in den Unterträgern des OFDM-Signals und aktuelle Signal-Rausch-Verhältnis-Werte von Hochfrequenzunterträgern in den Unterträgern des OFDM-Signals erfasst, wobei das OFDM-Signal durch den Laser (503) der Sendeseite (50) übertragen wird; und
die Datenverarbeitungseinheit (604) der Empfangsseite (60) einen aktuellen Signal-Rausch-Verhältnis-Mittelwert der Niederfrequenzunterträger gemäß den Signal-Rausch-Verhältnis-Werten der Niederfrequenzunterträger berechnet, einen aktuellen Signal-Rausch-Verhältnis-Mittelwert der Hochfrequenzunterträger gemäß den Signal-Rausch-Verhältnis-Werten der Hochfrequenzunterträger berechnet und ein Ergebnis als den aktuellen Signal-Rausch-Verhältnis-bezogenen Wert verwendet, wobei das Ergebnis durch Teilen des aktuellen Signal-Rausch-Verhältnis-Mittelwerts der Niederfrequenzunterträger durch den aktuellen Signal-Rausch-Verhältnis-Mittelwert der Hochfrequenzunterträger erhalten wird.

11. System nach Anspruch 9, wobei
der Empfänger (603) der Empfangsseite (60) aktuelle Signal-Rausch-Verhältnis-Werte von Niederfrequenzunterträgern in den Unterträgern des OFDM-Signals erfasst, wobei das OFDM-Signal durch den Laser (503) der Sendeseite (50) übertragen wird; und
die Datenverarbeitungseinheit (604) der Empfangsseite (60) den aktuellen Signal-Rausch-Verhältnis-bezogenen Wert gemäß der folgenden Formel erfasst:

$$\text{SNR}'_{\text{mean}\_w} = \frac{1}{N'} \times \sum_{k'=\text{Lstart}'}^{\text{Lend}'} 10^{\frac{\text{SNR}'_{k'}}{10}} ;$$

wobei $\text{SNR}'_{\text{mean}\_w}$ der aktuelle Signal-Rausch-Verhältnis-bezogene Wert ist, N' eine Menge der Niederfrequenzunterträger ist, Lstart' eine Ausgangsposition der Niederfrequenzunterträger ist, Lend' eine Endposition des Niederfrequenzunterträgers ist, k' eine positive Ganzzahl ist und $\text{SNR}'_{k'}$ ein aktueller Signal-Rausch-Verhältnis-Wert von jedem Niederfrequenzunterträger ist.

12. System nach Anspruch 9, wobei
der Empfänger (603) der Empfangsseite (60) aktuelle Signal-Rausch-Verhältnis-Werte von Niederfrequenzunterträgern in den Unterträgern des OFDM-Signals erfasst, wobei das OFDM-Signal durch den Laser (503) der Sendeseite (50) übertragen wird; und

die Datenverarbeitungseinheit (604) der Empfangsseite (60) einen aktuellen Signal-Rausch-Verhältnis-Mittelwert der Niederfrequenzunterträger gemäß den aktuellen Signal-Rausch-Verhältnis-Werten der Niederfrequenzunterträger berechnet und den aktuellen Signal-Rausch-Verhältnis-Mittelwert der Niederfrequenzunterträger als den aktuellen Signal-Rausch-Verhältnis-bezogenen Wert verwendet.

13. System nach einem der Ansprüche 10 bis 12, wobei die Sendeseite (50) ferner die Datenverarbeitungseinheit (501) und die Steuereinheit (502) umfasst und die Datenverarbeitungseinheit (501), die Steuereinheit (502) und der Laser (503) der Sendeseite (50) nacheinander verbunden sind;

wenn die Datenverarbeitungseinheit (604) der Empfangsseite (60) bestimmt, dass ein absoluter Wert des aktuellen Frequenzverschiebungswerts kleiner als ein erster vorgegebener Schwellwert und größer als ein zweiter vorgegebener Schwellwert ist, verwendet die Datenverarbeitungseinheit (604) der Empfangsseite (60) eine Gegenzahl des aktuellen Frequenzverschiebungswerts als den Frequenzeinstellwert und überträgt den Frequenzeinstellwert zu der Datenverarbeitungseinheit (501) der Sendeseite (50), wobei der erste vorgegebene Schwellwert größer als der zweite vorgegebene Schwellwert ist;

die Datenverarbeitungseinheit (501) der Sendeseite (50) einen aktuellen Mittenfrequenzwert des OFDM-Signals zu dem aktuellen Frequenzeinstellwert addiert, um einen festen Wert zu erhalten; und

die Steuereinheit (502) der Sendeseite (50) den Laser (503) steuert, um den aktuellen Mittenfrequenzwert des OFDM-Signals auf den festen Wert einzustellen.

14. System nach einem der Ansprüche 10 bis 12, wobei die Sendeseite (50) ferner die Datenverarbeitungseinheit (501) und die Steuereinheit (502) umfasst und die Datenverarbeitungseinheit (501), die Steuereinheit (502) und der Laser (503) der Sendeseite (50) nacheinander verbunden sind;

wenn bestimmt wird, dass ein absoluter Wert des aktuellen Frequenzverschiebungswerts größer oder gleich einem ersten vorgegebenen Schwellwert ist, und der aktuelle Frequenzverschiebungswert positiv ist, die Datenverarbeitungseinheit (604) der Empfangsseite (60) eine Gegenzahl des ersten vorgegebenen Schwellwerts als den aktuellen Frequenzverschiebungswert verwendet, und wenn der aktuelle Frequenzverschiebungswert negativ ist, den ersten vorgegebenen Schwellwert als den aktuellen Frequenzverschiebungswert verwendet, und den aktuellen Frequenzverschiebungswert zu der Datenverarbeitungseinheit (501) der Sendeseite (50) überträgt;

die Datenverarbeitungseinheit (501) der Sendeseite (50) einen aktuellen Mittenfrequenzwert des OFDM-Signals zu dem aktuellen Frequenzverschiebungswert addiert, um einen festen Wert zu erhalten; und

die Steuereinheit (502) der Sendeseite (50) den Laser (503) steuert, um den aktuellen Mittenfrequenzwert des OFDM-Signals auf den festen Wert einzustellen.

15. System nach einem der Ansprüche 10 bis 12, wobei die Sendeseite (50) ferner die Datenverarbeitungseinheit (501) und die Steuereinheit umfasst und die Datenverarbeitungseinheit (502), die Steuereinheit (503) und der Laser der Sendeseite nacheinander verbunden sind;

wenn bestimmt wird, dass ein absoluter Wert des aktuellen Frequenzverschiebungswerts kleiner oder gleich einem zweiten vorgegebenen Schwellwert ist, die Datenverarbeitungseinheit (604) der Empfangsseite (60) fortlaufend verschiedene Frequenzeinstellwerte zu der Datenverarbeitungseinheit (501) der Sendeseite (50) überträgt, wobei die Frequenzeinstellwerte auf Werte zwischen dem zweiten vorgegebenen Schwellwert und einer Gegenzahl des zweiten vorgegebenen Schwellwerts festgelegt sind und absolute Werte der Frequenzeinstellwerte gemäß einer ersten vorgegebenen Schrittlänge sukzessive zunehmen; und

die Steuereinheit (502) der Sendeseite (50) die Mittenfrequenz des durch den Laser (503) übertragenen OFDM-Signals gemäß dem Frequenzeinstellwert nach oben oder nach unten einstellt, bis eine Bitfehlerrate des durch den Empfänger (603) der Empfangsseite (60) von der Sendeseite (50) empfangenen OFDM-Signals am niedrigsten ist.

## Revendications

1. Procédé de réglage de la fréquence centrale d'un système à multiplexage par répartition orthogonale de la fréquence OFDM (orthogonal frequency division multiplexing), dans lequel le système OFDM comprend une extrémité d'émission (50) et une extrémité de réception (60), et le procédé comprend les étapes consistant à :

acquérir, par l'extrémité de réception (60), les valeurs actuelles du rapport signal sur bruit des sous-porteuses d'un signal OFDM émis par l'extrémité d'émission (50) ;

calculer, par l'extrémité de réception (60), une valeur actuelle liée au rapport signal sur bruit en fonction des valeurs actuelles du rapport signal sur bruit, dans lequel la valeur actuelle liée au rapport signal sur bruit est un résultat d'opération obtenu en effectuant une opération numérique sur les valeurs actuelles du rapport signal sur bruit, et différentes valeurs actuelles du rapport signal sur bruit correspondent à une valeur actuelle différente liée au rapport signal sur bruit ;

acquérir, par l'extrémité de réception (60), en fonction de la valeur actuelle liée au rapport signal sur bruit, une valeur actuelle de décalage de fréquence correspondant à la valeur actuelle liée au rapport signal sur bruit à partir d'une relation linéaire entre une valeur de décalage de fréquence d'une fréquence centrale du signal OFDM et une valeur liée au rapport signal sur bruit ;

déterminer, par l'extrémité de réception (60), une valeur de réglage de la fréquence en fonction de la valeur actuelle de décalage de la fréquence, et transmettre la valeur de réglage de la fréquence à l'extrémité d'émission (50) ; et

régler, par l'extrémité d'émission (50) en fonction de la valeur de réglage de la fréquence, la fréquence centrale du signal OFDM émis par l'extrémité d'émission (50).

2. Procédé selon la revendication 1, dans lequel
l'acquisition, par l'extrémité de réception (60), de valeurs actuelles du rapport signal sur bruit des sous-porteuses du signal OFDM émis par l'extrémité d'émission (50) comprend de manière spécifique l'étape consistant à :

acquérir, par l'extrémité de réception (60) depuis l'extrémité d'émission (50), des valeurs actuelles du rapport signal sur bruit des sous-porteuses à basse fréquence parmi les sous-porteuses du signal OFDM et des valeurs actuelles du rapport signal sur bruit des sous-porteuses à haute fréquence parmi les sous-porteuses du signal OFDM ; et

le calcul, par l'extrémité de réception (60), d'une valeur actuelle liée au rapport signal sur bruit en fonction des valeurs actuelles du rapport signal sur bruit, comprend de manière spécifique les étapes consistant à :

calculer, par l'extrémité de réception (60), une moyenne actuelle du rapport signal sur bruit des sous-porteuses à basse fréquence en fonction des valeurs du rapport signal sur bruit des sous-porteuses à basse fréquence, calculer une moyenne actuelle du rapport signal sur bruit des sous-porteuses à haute fréquence en fonction des valeurs du rapport signal sur bruit des sous-porteuses à haute fréquence, et utiliser un résultat comme valeur actuelle liée au rapport signal sur bruit, dans lequel le résultat est obtenu en divisant la moyenne actuelle du rapport signal sur bruit des sous-porteuses à basse fréquence par la moyenne actuelle du rapport signal sur bruit des sous-porteuses à haute fréquence.

3. Procédé selon la revendication 1, dans lequel
l'acquisition, par l'extrémité de réception (60), les valeurs actuelles du rapport signal sur bruit des sous-porteuses du signal OFDM émis par l'extrémité d'émission (50) comprend de manière spécifique l'étape consistant à :

acquérir, par l'extrémité de réception (60) depuis l'extrémité d'émission (50), les valeurs actuelles du rapport signal sur bruit des sous-porteuses à basse fréquence dans les sous-porteuses du signal OFDM ; et

le calcul, par l'extrémité de réception (60), d'une valeur actuelle liée au rapport signal sur bruit en fonction des valeurs actuelles du rapport signal sur bruit comprend de manière spécifique l'étape consistant à :

acquérir, par l'extrémité de réception (60), la valeur actuelle liée au rapport signal sur bruit, selon la formule suivante :

$$SNR'_{mean\_w} = \frac{1}{N'} \times \sum_{k'=Lstart'}^{Lend'} 10^{\frac{SNR'_{k'}}{10}} \; ;$$

où SNR'mean_w est la valeur actuelle liée au rapport signal sur bruit, N' est une quantité des sous-porteuses à basse fréquence, Lstart' est une position de départ de la sous-porteuse à basse fréquence, Lend' est une position finale de la sous-porteuse à basse fréquence, k' est un entier positif et SNR'k' est une valeur actuelle du rapport signal sur bruit de chaque sous-porteuse à basse fréquence.

4. Procédé selon la revendication 1, dans lequel
l'acquisition, par l'extrémité de réception (60), des valeurs actuelles du rapport signal sur bruit des sous-porteuses du signal OFDM émis par l'extrémité d'émission (50) comprend de manière spécifique l'étape consistant à :

acquérir, par l'extrémité de réception (60) depuis l'extrémité d'émission (50), les valeurs actuelles du rapport signal sur bruit des sous-porteuses à basse fréquence dans les sous-porteuses du signal OFDM ; et

le calcul, par l'extrémité de réception (60), d'une valeur actuelle liée au rapport signal sur bruit en fonction des valeurs actuelles du rapport signal sur bruit comprend de manière spécifique les étapes consistant à :

calculer, par l'extrémité de réception (60), une moyenne actuelle du rapport signal sur bruit des sous-porteuses à basse fréquence en fonction des valeurs actuelles du rapport signal sur bruit des sous-porteuses à basse fréquence, et

utiliser la moyenne actuelle du rapport signal sur bruit des sous-porteuses à basse fréquence en tant que valeur actuelle liée au rapport signal sur bruit.

5. Procédé selon l'une quelconque des revendications 1 à 4, dans lequel :
la détermination, par l'extrémité de réception (60), d'une valeur de réglage de la fréquence en fonction de la valeur actuelle de décalage de la fréquence, et la transmission de la valeur de réglage de la fréquence à l'extrémité d'émission (50) comprennent les étapes consistant à :

lorsque l'extrémité de réception (60) détermine qu'une valeur absolue de la valeur actuelle de décalage de la fréquence est inférieure à un premier seuil prédéfini et supérieure à un second seuil prédéfini, utiliser, par l'extrémité de réception (60), une valeur additive inverse de la valeur actuelle de décalage de la fréquence en tant que valeur de réglage de la fréquence, et transmettre la valeur de réglage de la fréquence à l'extrémité d'émission (50), dans lequel le premier seuil prédéfini est supérieur au second seuil prédéfini ; et

le réglage, par l'extrémité d'émission (50) en fonction de la valeur de réglage de la fréquence, de la fréquence centrale du signal OFDM émis par l'extrémité d'émission (50) comprend les étapes consistant à :

ajouter, par l'extrémité d'émission (50), une valeur actuelle de la fréquence centrale du signal OFDM à la valeur de réglage de la fréquence, pour obtenir une valeur fixe, et

régler la valeur actuelle de la fréquence centrale du signal OFDM à la valeur fixe.

6. Procédé selon l'une quelconque des revendications 1 à 4, dans lequel :
la détermination, par l'extrémité de réception (60), d'une valeur de réglage de la fréquence en fonction de la valeur actuelle de décalage de la fréquence, et la transmission de la valeur de réglage de la fréquence à l'extrémité d'émission (50) comprennent les étapes consistant à :

lorsque l'extrémité de réception (60) détermine qu'une valeur absolue de la valeur actuelle de décalage de la fréquence est supérieure ou égale à un premier seuil prédéfini et que la valeur actuelle de décalage de la fréquence est positive, utiliser, par l'extrémité de réception (60), une valeur additive inverse du premier seuil prédéfini en tant que valeur de réglage de la fréquence, et lorsque la valeur actuelle de décalage de la fréquence est négative, utiliser le premier seuil prédéfini comme valeur de réglage de la fréquence, et transmettre la valeur de réglage de la fréquence à l'extrémité d'émission (50) ; et

le réglage, par l'extrémité d'émission (50) en fonction de la valeur de réglage de la fréquence, de la fréquence centrale du signal OFDM émis par l'extrémité d'émission (50) comprend les étapes consistant à :

ajouter, par l'extrémité d'émission (50), une valeur actuelle de la fréquence centrale du signal OFDM à la valeur de réglage de la fréquence, pour obtenir une valeur fixe, et régler la valeur actuelle de la fréquence centrale du signal OFDM à la valeur fixe.

7. Procédé selon l'une quelconque des revendications 1 à 4, dans lequel :
la détermination, par l'extrémité de réception (60), d'une valeur de réglage de la fréquence en fonction de la valeur actuelle de décalage de la fréquence, et la transmission de la valeur de réglage de la fréquence à l'extrémité d'émission (50) comprennent l'étape consistant à :

lorsque l'extrémité de réception (60) détermine qu'une valeur absolue de la valeur actuelle de décalage de la fréquence est inférieure ou égale à un second seuil prédéfini, transmettre continuellement des valeurs différentes de réglage de la fréquence à l'extrémité d'émission (50), dans lequel les valeurs de réglage de la fréquence sont fixées sur des valeurs comprises entre le second seuil prédéfini et une valeur additive inverse du second seuil prédéfini ; et

le réglage, par l'extrémité d'émission (50) en fonction de la valeur de réglage de la fréquence, de la fréquence centrale du signal OFDM émis par l'extrémité d'émission (50) comprend l'étape consistant à :

régler la fréquence centrale du signal OFDM vers le haut ou vers le bas en fonction de la valeur de réglage de la fréquence, jusqu'à ce qu'un taux d'erreur sur les bits du signal OFDM acquis par l'extrémité de réception (60) à partir de l'extrémité d'émission (50) soit le plus bas.

8. Procédé selon l'une quelconque des revendications 1 à 7, dans lequel l'extrémité de réception acquiert la relation linéaire d'une des manières consistant à :

régler, par l'extrémité d'émission (50), la fréquence centrale du signal OFDM vers le haut ou vers le bas en utilisant différentes valeurs de décalage de la fréquence, dans lequel les valeurs de décalage de la fréquence sont fixées sur des valeurs comprises entre le premier seuil prédéfini et une valeur additive inverse du premier seuil prédéfini, et les valeurs absolues des valeurs de décalage de la fréquence augmentent successivement selon une seconde longueur de pas prédéfinie ;

acquérir séparément, par l'extrémité de réception (60) depuis l'extrémité d'émission (50), les valeurs du rapport signal sur bruit de plusieurs groupes de sous-porteuses correspondant au signal OFDM lorsque les différentes valeurs de décalage de la fréquence sont fixées ;

calculer, par l'extrémité de réception (60), une valeur liée au rapport signal sur bruit correspondante en fonction des valeurs du rapport signal sur bruit de chaque groupe de sous-porteuses, pour obtenir de multiples valeurs liées au rapport signal sur bruit correspondant aux différentes valeurs de décalage de la fréquence, dans lequel la valeur liée au rapport signal sur bruit est un résultat d'opération obtenu en effectuant une opération numérique sur les valeurs du rapport signal sur bruit, et différentes valeurs de rapport signal sur bruit correspondent à différentes valeurs liées au rapport signal sur bruit ;

et acquérir, par l'extrémité de réception (60), la relation linéaire entre une valeur de décalage de la fréquence et une valeur liée au rapport signal sur bruit dans le système OFDM conformément à une correspondance entre une valeur de décalage de la fréquence et une valeur liée au rapport signal sur bruit.

9. Système à multiplexage par répartition orthogonale de la fréquence OFDM, dans lequel le système OFDM comprend une extrémité d'émission (50) et une extrémité de réception (60), l'extrémité d'émission (50) comprend un laser (503) et l'extrémité de réception (60) comprend un récepteur (603) et une unité de traitement de données (604), dans lequel

le récepteur (603) de l'extrémité de réception (60) est configuré pour acquérir des valeurs actuelles du rapport signal sur bruit des sous-porteuses d'un signal OFDM émis par le laser de l'extrémité d'émission (50) ;

l'unité de traitement de données (604) de l'extrémité de réception (60) est configurée pour calculer une valeur actuelle liée au rapport signal sur bruit en fonction des valeurs actuelles du rapport signal sur bruit, dans lequel la valeur actuelle liée au rapport signal sur bruit est un résultat d'opération obtenu en effectuant une opération numérique sur les valeurs actuelles du rapport signal sur bruit, et différentes valeurs actuelles du rapport signal sur bruit correspondent à une valeur actuelle différente liée au rapport signal sur bruit ;

l'unité de traitement de données (604) de l'extrémité de réception (60) est configurée pour acquérir, en fonction de la valeur actuelle liée au rapport signal sur bruit, une valeur actuelle de décalage de la fréquence correspondant à la valeur actuelle liée au rapport signal sur bruit à partir d'une relation linéaire entre une valeur de décalage de la fréquence d'une fréquence centrale du signal OFDM et une valeur liée au rapport signal sur bruit ;

l'unité de traitement de données (604) de l'extrémité de réception (60) est configurée pour déterminer une valeur de réglage de la fréquence en fonction de la valeur actuelle de décalage de la fréquence, et configurée pour transmettre la valeur de réglage de la fréquence à une unité de traitement de données (501) de l'extrémité d'émission (50) ; et

l'unité de traitement de données (501) de l'extrémité d'émission (50) est configurée pour commander, en fonction de la valeur de réglage de la fréquence, une unité de commande (502) pour régler la fréquence centrale du signal OFDM émis par le laser (503).

10. Système selon la revendication 9, dans lequel :

le récepteur (603) de l'extrémité de réception (60) acquiert des valeurs actuelles du rapport signal sur bruit des sous-porteuses à basse fréquence parmi les sous-porteuses du signal OFDM et des valeurs actuelles du rapport signal sur bruit des sous-porteuses à haute fréquence parmi les sous-porteuses du signal OFDM, où le signal OFDM est émis par le laser (503) de l'extrémité d'émission (50) ; et

l'unité de traitement de données (604) de l'extrémité de réception (60) calcule une moyenne actuelle du rapport signal sur bruit des sous-porteuses à basse fréquence en fonction des valeurs du rapport signal sur bruit des sous-porteuses à basse fréquence, calcule une moyenne actuelle du rapport signal sur bruit des sous-porteuses à haute fréquence en fonction des valeurs du rapport signal sur bruit des sous-porteuses à haute fréquence, et utilise un résultat comme valeur actuelle liée au rapport signal sur bruit, où le résultat est obtenu en divisant la moyenne actuelle du rapport signal sur bruit des sous-porteuses à basse fréquence par la moyenne actuelle du rapport signal sur bruit des sous-porteuses à haute fréquence.

11. Système selon la revendication 9, dans lequel :

le récepteur (603) de l'extrémité de réception (60) acquiert les valeurs actuelles du rapport signal sur bruit des sous-porteuses à basse fréquence parmi les sous-porteuses du signal OFDM, où le signal OFDM est émis par le laser (503) de l'extrémité d'émission (50) ; et

l'unité de traitement de données (604) de l'extrémité de réception (60) acquiert la valeur actuelle liée au rapport signal sur bruit selon la formule suivante :

$$SNR'_{mean\_w} = \frac{1}{N'} \times \sum_{k'=Lstart'}^{Lend'} 10^{\frac{SNR'_{k'}}{10}} \; ;$$

où SNR'mean_w est la valeur actuelle liée au rapport signal sur bruit, N' est une quantité des sous-porteuses à basse fréquence, Lstart' est une position de départ de la sous-porteuse à basse fréquence, Lend' est une position finale de la sous-porteuse à basse fréquence, k' est un entier positif et SNR'k' est une valeur actuelle du rapport signal sur bruit de chaque sous-porteuse à basse fréquence.

12. Système selon la revendication 9, dans lequel :

le récepteur (603) de l'extrémité de réception (60) acquiert les valeurs actuelles du rapport signal sur bruit des sous-porteuses à basse fréquence parmi les sous-porteuses du signal OFDM, où le signal OFDM est émis par le laser (503) de l'extrémité d'émission (50) ; et

l'unité de traitement de données (604) de l'extrémité de réception (60) calcule une moyenne actuelle du rapport signal sur bruit des sous-porteuses à basse fréquence en fonction des valeurs actuelles du rapport signal sur bruit des sous-porteuses à basse fréquence, et utilise la moyenne actuelle du rapport signal sur bruit des sous-porteuses à basse fréquence en tant que valeur actuelle liée au rapport signal sur bruit.

13. Système selon l'une quelconque des revendications 10 à 12, dans lequel l'extrémité d'émission (50) comprend en outre l'unité de traitement de données (501) et l'unité de commande (502), et l'unité de traitement de données (501), l'unité de commande (502) et le laser (503) de l'extrémité d'émission (50) sont connectés en séquence ;

lorsque l'unité de traitement de données (604) de l'extrémité de réception (60) détermine qu'une valeur absolue de la valeur actuelle de décalage de la fréquence est inférieure à un premier seuil prédéfini et supérieure à un second seuil prédéfini, l'unité de traitement de données (604) de l'extrémité de réception (60) utilise une valeur additive inverse de la valeur actuelle de décalage de la fréquence en tant que valeur de réglage de la fréquence, et transmet la valeur de réglage de la fréquence à l'unité de traitement de données (501) de l'extrémité d'émission (50), dans lequel le premier seuil prédéfini est supérieur au second seuil prédéfini ;

l'unité de traitement de données (501) de l'extrémité d'émission (50) ajoute une valeur actuelle de la fréquence centrale du signal OFDM à la valeur actuelle de réglage de la fréquence, pour obtenir une valeur fixe ; et

l'unité de commande (502) de l'extrémité d'émission (50) commande le laser (503) pour régler la valeur actuelle de la fréquence centrale du signal OFDM à la valeur fixe.

14. Système selon l'une quelconque des revendications 10 à 12, dans lequel l'extrémité d'émission (50) comprend en outre l'unité de traitement de données (501) et l'unité de commande (502), et l'unité de traitement de données (501), l'unité de commande (502) et le laser (503) de l'extrémité d'émission (50) sont connectés en séquence ;

lorsque l'on détermine qu'une valeur absolue de la valeur actuelle de décalage de la fréquence est supérieure ou égale à un premier seuil prédéfini et que la valeur actuelle de décalage de la fréquence est positive, l'unité de traitement de données (604) de l'extrémité de réception (60) utilise une valeur additive inverse du premier seuil prédéfini en tant que valeur actuelle de décalage de la fréquence, et lorsque la valeur actuelle de décalage de la fréquence est négative, utilise le premier seuil prédéfini en tant que valeur actuelle de décalage de la fréquence ; et transmet la valeur actuelle de décalage de la fréquence à l'unité de traitement de données (501) de l'extrémité d'émission (50),

l'unité de traitement de données (501) de l'extrémité d'émission (50) ajoute une valeur actuelle de la fréquence centrale du signal OFDM à la valeur actuelle de décalage de la fréquence, pour obtenir une valeur fixe ; et l'unité de commande (502) de l'extrémité d'émission (50) commande le laser (503) pour régler la valeur actuelle de la fréquence centrale du signal OFDM à la valeur fixe.

15. Système selon l'une quelconque des revendications 10 à 12, dans lequel l'extrémité d'émission (50) comprend en outre l'unité de traitement de données (501) et l'unité de commande, et l'unité de traitement de données (502), l'unité de commande (503) et le laser de l'extrémité d'émission sont connectés en séquence ; lorsque l'on détermine qu'une valeur absolue de la valeur actuelle de décalage de la fréquence est inférieure ou égale à un second seuil prédéfini, l'unité de traitement de données (604) de l'extrémité de réception (60) transmet en continu différentes valeurs de réglage de la fréquence à l'unité de traitement de données (501) de l'extrémité d'émission (50), dans lequel les valeurs de réglage de la fréquence sont fixées sur des valeurs comprises entre le second seuil prédéfini et une valeur additive inverse du second seuil prédéfini, et les valeurs absolues des valeurs de réglage de la fréquence augmentent successivement selon une première longueur de pas prédéfinie ; et l'unité de commande (502) de l'extrémité d'émission (50) règle vers le haut et vers le bas, en fonction de la valeur de réglage de la fréquence, la fréquence centrale du signal OFDM émis par le laser (503), jusqu'à ce qu'un taux d'erreur sur les bits du signal OFDM reçu par le récepteur (603) de l'extrémité de réception (60) à partir de l'extrémité d'émission (50) soit le plus bas.

FIG. 1

FIG. 2

FIG. 3

FIG. 4

A filtering window of a
beam splitter shifts, which
changes a single sideband
effect of an OFDM signal
and results in deterioration
of system performance

Frequency

Center frequency
of filtering of the
beam splitter

Center
frequency of an
OFDM signal

FIG. 5

50

60

Transmit
end

Receive end

FIG. 6

1101

A transmit end adjusts a center frequency of an OFDM signal upwards or downwards by using different frequency shift values

1102

A receive end separately acquires, from the transmit end, signal-to-noise ratio values of multiple subcarrier groups corresponding to the OFDM signal when the different frequency shift values are set

1103

The receive end calculates a corresponding signal-to-noise-ratio-related value according to signal-to-noise ratio values of each subcarrier group, to obtain different signal-to-noise-ratio-related values corresponding to different frequency shift values

1104

The receive end acquires a linear relationship between a frequency shift value and a signal-to-noise-ratio-related value in an OFDM system according to a correspondence between a frequency shift value and a signal-to-noise-ratio-related value

FIG. 7

FIG. 8

1201

A receive end acquires current signal-to-noise ratio values of subcarriers of an OFDM signal transmitted by a transmit end

1202

The receive end calculates a current signal-to-noise-ratio-related value according to the current signal-to-noise ratio values

1203

The receive end acquires, according to the current signal-to-noise-ratio-related value, a current frequency shift value corresponding to the current signal-to-noise-ratio-related value from a linear relationship between a frequency shift value of a center frequency of an OFDM signal and a signal-to-noise-ratio-related value

1204

The receive end determines a frequency adjustment value according to the current frequency shift value, and transmits the frequency adjustment value to the transmit end

1205

The transmit end adjusts, according to the frequency adjustment value, the center frequency of the OFDM signal transmitted by the transmit end

FIG. 9

## 50

### 503
Laser

### 502
Control unit

### 501
Data processing unit

## 60

### 603
Receiver

### 604
Data processing unit

FIG. 10

## 50

### 503
Laser

### 504
Beam combiner

### 505
Optical amplifier

### 502
Control unit

### 501
Data processing unit

## 60

### 601
Optical amplifier

### 602
Beam splitter

### 603
Receiver

### 604
Data processing unit

FIG. 11

Start — 1301 — 1302

An OFDM system outputs
an SNR of each subcarrier

Calculate a mean of SNRs of N subcarriers at a
low frequency — 1303

Detect, according to the SNR mean, a system
frequency shift TestFreqShift in a pre-specified
table showing a relationship between an SNR
and a frequency shift — 1304

If an absolute value of the detected value of the
frequency shift is greater than a preset threshold
THD, perform adjustment according to THD,
where AdjFreqShift =
max(min(TestFreqShift,THD),-THD) — 1305

Determine
whether the frequency shift is
beyond a basic frequency shift
adjustment range
abs(TestFreqShift) >
TargetFreq — 1306

**N**

Set AdjFreqShift to s GHz
or –s GHz; if better
performance can be
achieved by means of
adjustment in a certain
direction, continue to
conduct a frequency shift in
this direction, till an optimal
BER point is found, where a
step length is s GHz — 1308

**Y**

Insert a frequency shift
detection result
AdjFreqShift into an auto-
negotiation data packet of
the OFDM system, and
feeds back the data packet
to a control unit of a
transmit end — 1307

The control unit of the transmit end adjusts a
frequency of a laser according to a detection
result AdjFreqShift — 1309

**N**

A quantity
of times of adjustments AdjTimes >
AdjTimesTHD — 1310

**Y** — 1311

The current adjustment ends

FIG. 12

Start — 1401

Frequency adjustment
direction of a laser D = 1 — 1402

Set a current frequency and
a BER as optimal points
F_OPT = F_SCAN
BER_OPT = BER — 1403

Determine
whether a current
adjustment
direction D = 1 — 1404

N

Y

The frequency of the
laser shifts to the right
by Sopt GHz
$F_{before} = F_{cur}$
$F_{cur} = F_{cur} + S_{opt}$ — 1405

The frequency of the
laser shifts to the left
by Sopt GHz
$F_{before} = F_{cur}$
$F_{cur} = F_{cur} - S_{opt}$ — 1406

Change a frequency
adjustment direction
of the laser D = 0 — 1407

Acquire a current BER of a
system according to auto-
negotiation data — 1408

Find a point with
better performance
BER<=BER_OPT — 1409

Y

N

Have adjustments
$F_{before}-S_{opt}$ and
$F_{before}+S_{opt}$ been
tried? — 1410

N

Y

End — 1411

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09224015 A

**Non-patent literature cited in the description**

- SNR Analysis of OFDM Systems in the Presence of Carrier Frequency Offset for Fading Channels. **JUNGWON LEE et al.** IEEE Transactions on Wireless Communications. IEEE Service Center, 01 December 2006, vol. 5, 3360-3364